# EUROPEAN PATENT SPECIFICATION

(11) **EP 1 999 719 B1**
(45) Date of publication and mention of the grant of the patent: **21.11.2018**
(21) Application number: 07740947.2
(22) Date of filing: 28.03.2007
(51) Int. Cl.: G06T 15/30, G06T 11/00

(54) **SERVER APPARATUS OF COMPUTER SYSTEM**
SERVERGERÄT EINES COMPUTERSYSTEMS
DISPOSITIF SERVEUR DE SYSTÈME INFORMATIQUE

(30) Priority: 29.03.2006 JP 2006091628; 30.03.2006 JP 2006095744
(43) Date of publication of application: 10.12.2008
(73) Proprietor: CASIO COMPUTER CO., LTD., Shibuya-ku, Tokyo 151-8543 (JP)
(72) Inventor: OHTSUKA, Toshihiko, Tokyo 205-8555 (JP); HIROTANI, Takayuki, Tokyo 205-8555 (JP)
(74) Representative: Grünecker Patent- und Rechtsanwälte PartG mbB
(86) International application number: PCT/JP2007/057511
(87) International publication number: WO 2007/114456

(56) References cited:
- EP-A- 1 450 277
- EP-A- 1 503 344
- WO-A-02/43365
- US-A1- 2005 024 364
- US-B1- 6 192 393

## Description

The present invention relates to a server apparatus of a computer system (thin client), wherein all applications which are input/output and displayed by a client personal computer (PC) are operated on a server, in a client-server system connected via a network such as a local area network (LAN).

Traditionally, each PC terminal connected to a network such as an in-house LAN individually starts and executes an application such as a document creation or table creation application, and various files created accordingly are saved in a storage device of each of the PC terminals, or saved in an external storage device such as a magnetic disk, an optical disk or a small semiconductor memory, or transferred to and saved in a storage device managed by a server on the network.

In such a conventional client-server system, the created files are managed in each of the PC terminals itself, so that the saved files might be read to result in the leakage of important information or secret information in case where the PC terminal is lost or illegally taken out and passed to a third party.

Moreover, when each of the PC terminals individually starts and executes the application, the tasks of updating, modifying and adding to the application have to be carried out for each of the PC terminals, leading to troublesome management and increased costs.

Therefore, in a recent client-server system, a server based computing (SBC) system [thin client system] have been increasingly introduced, wherein all the applications which are input/output and displayed by each of the PC terminals (client PC) are started and executed on the server, and all the files created accordingly are managed on the side of the server (e.g., refer to Jpn. Pat. Appln. KOKAI Publication No. 2004-171063, and Jpn. Pat. Appln. KOKAI Publication No. 2003-158534.).

In such a thin client system, drawing data from application software executed on the server side is transferred to the client PC where the drawing data is displayed (e.g., refer to Jpn. Pat. Appln. KOKAI Publication No. 2004-503862.).

In the above-mentioned conventional thin client system, the drawing data created by the application software executed on the server side is transferred to the client PC and displayed on its display screen. However, because the size of the display screen of the client PC is generally envisioned for 640 × 480 dots which is the size of video graphic array (VGA), display data is generated on the server side using this VGA size as a standard and then transferred to the client PC.

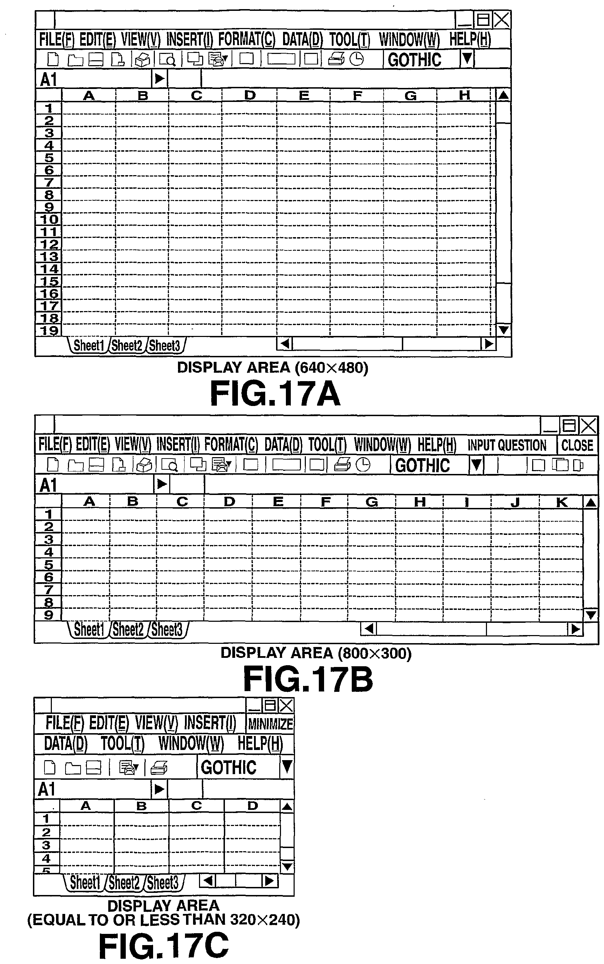

FIGS. 17A, 17B and 17C are diagrams showing display screen data generated and transferred on the server side in the conventional thin client system, wherein 17A is a diagram showing table display screen data when the size of the display screen of the client PC is the VGA size, 17B is a diagram showing the table display screen data when the PC screen size is laterally wider than the VGA size, and 17C is a diagram showing the table display screen data when the PC screen size is a quarter of the VGA size.

That is, the server generates the table display screen data using the VGA size as the standard as shown in FIG. 17A, so that when the size of the display screen of the client PC is laterally wider than the VGA size, there is enough space for setting areas of menu icons and tool bars in generating the table display screen data, and the table display screen data is generated in which more icons are arranged.

On the other hand, as shown in FIG. 17C, when the client PC is, for example, a personal digital assistant (PDA), and the size of its display screen is equal to or less than 320 × 240 dots which is longitudinally and laterally much smaller than the VGA size, the menu icons and tool bars are longitudinally displayed on a plurality of stages in order to set those menu icons and tool bars which are minimally essential in generating the table display screen data. Therefore, a large space within the display screen is occupied by the area for user operation, so that an original data display area (cell area) is significantly reduced and becomes extremely difficult to view, resulting in a problem of a decrease in the operability for inputting data.

From reference EP-A-1450277 it is known that a portion of an image field (e.g., a map) to be displayed on a display at a client device (e.g., a thin client such as a mobile phone) may be downloaded on request from a server as a plurality of image tiles representing respective portions of the image field. A first image tile represents a portion at the centre of the image to be displayed on the display and further image tiles represent portions surrounding the first tile. However, the total area of the image tiles exceeds the area of the display, which causes a waste of transmission bandwidth.

U.S. patent No. 6,192,393 discloses a method and system for viewing panoramas over a server-client network including storing an image in tiled form on a server, receiving at a server from a client a request for at least a portion of the image, transmitting from the server to the client at least one tile corresponding to the portion of the image requested by the client, and carrying out an individual tile-wise perspective correction on said at least one tile.

In any of these conventional systems, however, there is a trade-off between the transmission overhead caused by transmitting a plurality of individual tiles, on the one hand, and the amount of superfluously transmitted image information, namely the image information corresponding to portions of the transmitted tiles that exceed the client's display area, on the other hand.

It is thus the aim of the present invention to provide a server apparatus of a computer system which can generate and efficiently transfer easy-to-view display screen data even when the size of a display screen of a client apparatus is much less than, for example, a VGA size.

This is achieved by the features of the independent claims. Preferred embodiments are subject matter of the dependent claims.

According to the present invention, a display area of, for example, a VGA size larger than the display area of the client apparatus is set as the drawing area for the display data on the basis of the information on the display area of the client apparatus. When a display command received from the client apparatus is a real display command, display data of an area corresponding to the display area of the client apparatus is extracted out of the display data drawn in the set drawing area, and transferred to and displayed on the client apparatus. On the other hand, when a display command received from the client apparatus is a full display command, the display data drawn in the set drawing area is reduced in accordance with the display area of the client apparatus, and transferred to and displayed on the client apparatus. Thus, even when the connected client apparatus is, for example, a PDA, and the size of its display screen is significantly small, an original data display area can be displayed as widely as possible and in an easy-to-view manner without the occupation of a large space within the display screen by the area for user operation.

According to the present invention, the magnification changing circuit, the area dividing circuit and the judging circuit are formed by hardware at the time of generating the display data which is transmitted to the client apparatuses so that it is possible to generate the display data which is transmitted to the client apparatus at high velocity while reducing the load on control means. Moreover, because the load on the control means is reduced, the number of client apparatuses to be connected can be increased accordingly.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.

The accompanying drawings, which are incorporated in and constitute a part of the specification, illustrate embodiments of the invention, and together with the general description given above and the detailed description of the embodiments given below, serve to explain the principles of the invention.
FIG. 1 is a block diagram showing the configuration of a thin client system comprising a server apparatus 10 according to an embodiment of the present invention, and its client apparatuses 20a, 20b, ...;
FIG. 2 is a block diagram showing the circuit configuration of the server apparatus 10 in the thin client system;
FIG. 3 is a block diagram showing the configuration of an accelerator circuit 101 in the server apparatus 10 of the thin client system;
FIG. 4 is a block diagram showing the configuration of a scaling circuit 11c in the accelerator circuit 101 in the server apparatus 10;
FIG. 5 is a block diagram showing the configuration of a scaling operation circuit C6 in the scaling circuit 11c in the accelerator circuit 101;
FIG. 6 is a flowchart showing control of overall operation in the server apparatus 10 of the thin client system;
FIG. 7 is a flowchart showing client-by-client transfer server processing (step SA) associated with server processing in the server apparatus 10;
FIG. 8 is a diagram showing an image (No. 1) of a procedure of generating transfer display data in accordance with a real display command associated with the transfer server processing in the server apparatus 10;
FIG. 9 is a diagram showing an image (No. 2) of the procedure of generating the transfer display data in accordance with the real display command associated with the transfer server processing in the server apparatus 10;
FIG. 10 is a diagram showing an image (No. 3) of the procedure of generating the transfer display data in accordance with the real display command associated with the transfer server processing in the server apparatus 10;
FIG. 11 is a diagram showing an image of a procedure of generating transfer display data in accordance with a full display command associated with the transfer server processing in the server apparatus 10;
FIG. 12 shows a transfer data format of accelerator-processed data generated in association with the transfer server processing in the server apparatus 10;
FIGS. 13A through 13E are diagrams showing how the display data is generated for the client apparatus 20 associated with the transfer server processing in the server apparatus 10, wherein 13A, 13B and 13C are diagrams showing how the display data is generated in accordance with the real display command from the client apparatus 20, and 13D and 13E are diagrams showing how the display data is generated in accordance with the full display command from the client apparatus 20;
FIG. 14 is a block diagram showing the circuit configuration of the client apparatus 20 in the thin client system;
FIG. 15 is a flowchart showing control of overall operation in the client apparatus 20 of the thin client system;
FIGS. 16A and 16B show processing (step JK) of controlling a communication with the server apparatus 10 associated with the control of overall operation in the client apparatus 20; wherein 16A is a flowchart of the processing, and 16B shows a transmission protocol for the server apparatus 10;
FIGS. 17A, 17B and 17C are diagrams showing display screen data generated and transferred on the side of the server in a conventional thin client system, wherein 17A is a diagram showing table display screen data when the size of a display screen of a client PC is a VGA size, 17B is a diagram showing the table display screen data when the PC screen size is laterally wider than the VGA size, and 17C is a diagram showing the table display screen data when the PC screen size is a quarter of the VGA size;
FIGS. 18A, 18B and 18C are diagrams showing how the drawing data generated in the server apparatus 10 is transferred to and displayed on the client apparatus 20;
FIGS. 19A and 19B are diagrams showing in detail transfer drawing data H generated by the accelerator circuit 101 on the basis of an area Q' of drawing data G' after change in the server apparatus 10;
FIG. 20 is a block diagram showing the configuration of a tile division judging circuit 11d;
FIG. 21 is a block diagram showing the configuration of a comparison/compression circuit 11e;
FIG. 22A is a diagram showing a detailed configuration of the comparison circuit shown in FIG. 21, and FIG. 22B is a diagram showing one example of the configuration of a buffer 356 for the number of vertical × horizontal lines and pixels;
FIGS. 23A and 23B are block diagrams showing a detailed configuration of a compression circuit 357 shown in FIG. 21;
FIG. 24 is a block diagram showing a detailed configuration of a circuit 451 for counting the number of colors;
FIG. 25 is a block diagram showing a detailed configuration of a penetration color detection circuit 454;
FIG. 26 is a diagram showing a table for deciding a compression method;
FIG. 27 is a diagram showing one example of a table for result data and header formats;
FIG. 28 is a flowchart showing the operation of the transfer server processing;
FIG. 29 is a diagram showing a detailed configuration of an accelerator circuit 21 in the client apparatus; and
FIG. 30 is a flowchart showing details of control of a communication with the server.

A first embodiment of the present invention will hereinafter be described with reference to the drawings.

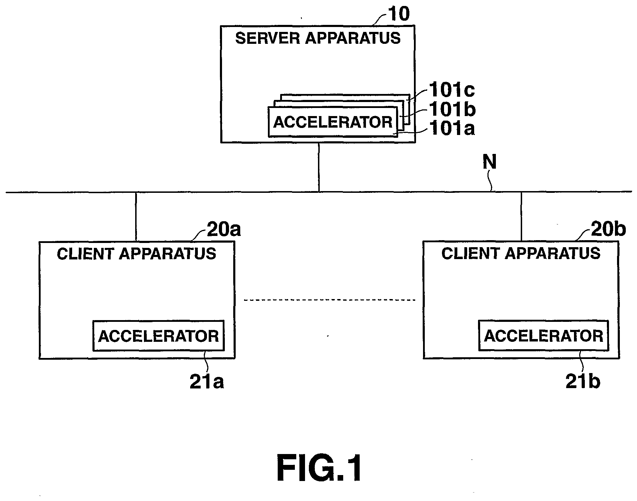

FIG. 1 is a block diagram showing the configuration of a thin client system comprising a server apparatus 10 according to the embodiment of the present invention, and its client apparatuses 20a, 20b, ....

This thin client system comprises the server apparatus 10 and the plurality of client apparatuses 20a, 20b, ... that are connected on a network N including a local area network (LAN) or a wide area network (WAN).

The server apparatus 10 has a plurality of application programs such as a document creation processing program, a table creation processing program, a mail processing program, an Internet connection processing program and a Web display program, and the server apparatus 10 starts the program and executes its processing in response to an operation input signal from the client apparatus 20a, 20b, ... connected to the server apparatus 10.

In this server apparatus 10, display/output drawing data generated in connection with the execution of the application program responsive to the operation input signal from the client apparatus 20a, 20b, ... is converted into transfer drawing data by an accelerator circuit 101a, 101b, .... The drawing data is also compressed by a compression mode suitable for the contents of the drawing data and for the state of a communication with the client apparatus 20a, 20b, ..., and then encrypted. Thus, the drawing data is transmitted (transferred) to the client apparatus 20a, 20b, ... which is the source of access.

Then, in the client apparatus 20a, 20b, ..., the drawing data transferred from the server apparatus 10 is decoded in an accelerator circuit (circuit board) 21a, 21b, ... within each of the client apparatuses, and displayed on its display unit.

That is, each of the client apparatuses 20a, 20b, ... in this thin client system only has input functions corresponding to user operations such as a keyboard, a mouse, etc., and output functions such as the LCD display unit, a printer, etc., and does not have any its own application function and management function for data files.

Then, a data file created in connection with various kinds of processing started and executed in the server apparatus 10 in accordance with the operation input signal from the client apparatus 20a, 20b, ... is stored and saved for each user account or as a shared file in a storage device such as a magnetic disk which is in the server apparatus 10 or which is connected and managed by the server apparatus 10.

Here, an outline will be described of the function of generating the transfer drawing data in the server apparatus 10.

As a result of connecting with the client apparatus 20, the server apparatus 10 receives, from the client apparatus 20, information on the specifications of its display device (the size of a display screen: H (the number of vertical pixels) × W (the number of horizontal pixels), the number of colors which can be displayed, and a virtual display magnification α), information on a decodable compression mode, and information on whether there is an encryption setting.

Here, the virtual display magnification α associated with the display device of the client apparatus 20 is a magnification including the ratio to the actual size of the display screen for setting a virtual size of the display screen having an area which is larger than the actual size of the display screen of the display device and in which display data is to be generated by the server apparatus 10. For example, the actual size of the display screen of the client apparatus 20 is a small size of 320 × 240 dots (pixels), and it is desired that the display data be generated in a VGA size of 640 × 480 dots (pixels) in the server apparatus 10, in which case the virtual display magnification α = 2.

In accordance with this, the server apparatus 10 first generates the display data drawn by the application being executed, in a virtual display area (frame buffer) of, for example, the VGA size which is α times as large as the size (H × W) of the display screen of the client apparatus 20. Then, the display data generated in the virtual display area (frame buffer) is cut (real display) or the whole display data is reduced (full display), in accordance with the size (H × W) of the display screen of the client apparatus 20 and in accordance with a designated position for display, thereby generating display data for the client apparatus 20.

Thus, even if the size of the display screen of the client apparatus 20 is, for example, a small PDA size of 320 × 240 dots, the server apparatus 10 generates and transfers the display data for the client apparatus 20 on the basis of the display data drawn in the virtual display area (frame buffer) of, for example, the VGA size. Thus, a large space within the small display screen is not occupied especially by the area for the user operation including menu icons, tool bars, etc., and an easy-to-view display can be achieved.

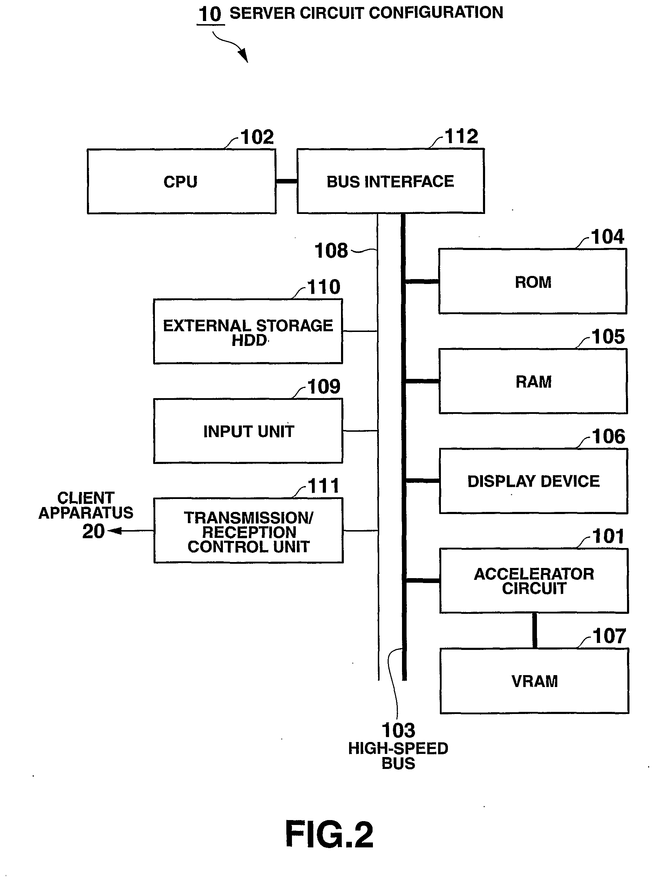

FIG. 2 is a block diagram showing the circuit configuration of the server apparatus 10 in the thin client system.

The server apparatus 10 comprises a CPU 102 as a computer. To the CPU 102, a ROM 104, a RAM 105 and a display device 106 are connected via a bus interface 112 and a high-speed bus 103, and the accelerator circuit (circuit board) 101 is also connected. A VRAM 107 is mounted on and connected to this accelerator circuit 101 as a work memory of the accelerator circuit 101.

There are also connected, to the CPU 102 via a normal bus 108, an input 109 such as a keyboard, an external storage hard disk drive (HDD) 110, and a control unit 111 for transmission to/reception from the client apparatus 20.

The CPU 102 controls the operations of the components of the circuits using the RAM 105 as a work memory in accordance with a system program or the various application programs stored in the ROM 104 in advance. The various programs are started and executed, for example, in response to a key input signal from the input 109 or a processing command signal corresponding to the user operation from the client apparatus 20 received via the transmission/reception control unit 111.

Various kinds of data generated in accordance with the application programs started and executed in response to a user instruction signal from the client apparatus 20 are stored in the external storage HDD 110, for example, to correspond to an ID of the user. Moreover, display drawing data is generated in the accelerator circuit (circuit board) 101 as transfer display data by use of the VRAM 107, optimally compressed and encrypted, and then transferred from the transmission/reception control unit 111 to the client apparatus 20 where the drawing data is displayed and output.

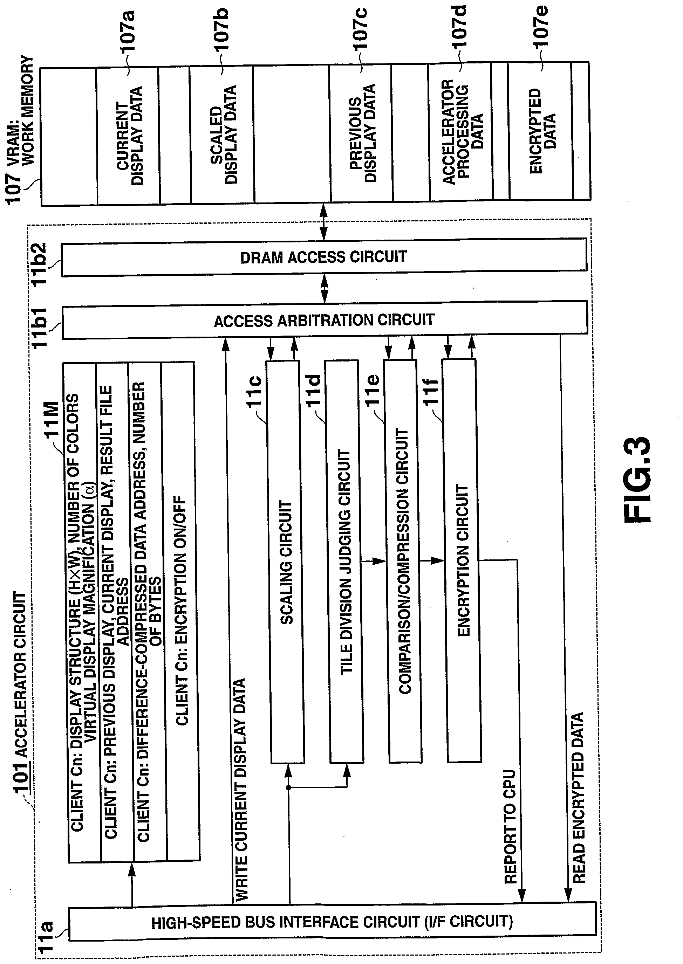

FIG. 3 is a block diagram showing the configuration of the accelerator circuit 101 in the server apparatus 10 of the thin client system.

This accelerator circuit 101 has an interface circuit (I/F circuit) 11a connected to the high-speed bus 103 from the server CPU 102. The VRAM 107 is connected to this interface circuit 11a via an access arbitration circuit 11b1 and a DRAM access circuit 11b2.

The display drawing data generated in accordance with each of the application programs started and executed by the CPU 102 in response to an operation command signal from each of the client apparatuses 20a, 20b, ... is stored in the VRAM 107 so that the drawing data is assigned for each of the client apparatuses 20a, 20b, ... as current display data 107a, previous display data 107c, and scaled display data 107b scaled in accordance with the size of the display screen of the client apparatus 20a, 20b, .... Moreover, the transfer display data which has been divided into tiles, compared/compressed and encrypted on the basis of the display data 107a to 107c is stored as the accelerator processing data 107b and encrypted data 107e.

Furthermore, between the interface circuit 11a and the access arbitration circuit 11b1, there are connected a scaling circuit 11c for generating, from the generated display drawing data (the drawing data 107a), its transfer display data, a tile division judging circuit 11d, a comparison/compression circuit 11e and an encryption circuit 11f. A command to start processing is input to the scaling circuit 11c and the tile division judging circuit 11d from the CPU 102 via the high-speed bus interface 11a.

The scaling circuit 11c reduces, in accordance with the size of the display screen of each of the client apparatuses 20a, 20b, ..., the drawing data generated on the frame buffer of the VGA size as the virtual display area in accordance with the application program responsive to the operation command signal of each of the client apparatuses 20a, 20b, .... The drawing data whose size has been adjusted by the scaling circuit 11c is stored as the scaled display data 107b into the VRAM 107 from the access arbitration circuit 11b1 via the DRAM access circuit 11b2.

The tile division judging circuit 11d divides into tiles the display drawing data (the current display data 107a and the scaled display data 107b) read from the VRAM 107 after setting the number of tile divisions (the number of vertical × horizontal pixels per tile) judged depending on the size of the area of the drawing data. When the size of an image of the drawing data (the current display data 107a) for, for example, the client apparatus 20a read from the VRAM 107 corresponds to 320 × 240 pixels, one tile (T) is set to 8 × 8 pixels, such that the drawing data is divided into tiles.

It is to be noted that the set size of the area for one tile (T) produced by the tile division is determined suitably to the size of the image of the drawing data, for example, 16 × 16 pixels or 32 × 32 pixels.

The comparison/compression circuit 11e first compares the current display data 107a and the scaled display data 107b read from the VRAM 107 with the previous display data 107c read from the VRAM 107 per tile (T) divided by the tile division judging circuit 11d, and then converts image pixels with no change (difference) into penetration color data S which does not need to be rewritten. The data is optimally compressed in accordance with whether the client apparatus 20 designates compression and stored as accelerator processing data 107d in the VRAM 107, every time the conversion of the unchanged image pixels into the penetration color data S by the comparison of the image per tile (T) is finished for one block in a horizontal direction of the display data. Further, the data is encrypted by the encryption circuit 11f in accordance with whether the client apparatus 20 designates encryption, and stored as the encrypted data 107e into the VRAM 107.

This encrypted data 107e is read by the CPU 102 as the display data for transfer to the client apparatus 20, and transferred to the client apparatus 20.

In this case, image tiles in which all the image pixels for one tile (T) have been converted into the penetration color data S are not transferred to the client apparatus 20a.

Furthermore, the accelerator circuit 101 is equipped with a client management information memory 11M for storing management information for each of the client apparatuses (Cn) 20a, 20b, .... As the management information, there are stored the size of the display screen of the client apparatus 20 (display structure: H × W), the number of colors that can be expressed, the virtual display magnification (α), an address of the current display data 107a in the VRAM 107, an address of the previous display data 107c, an address of the encrypted data (result file) 107e, an address of the accelerator processing data (difference-compressed data) 107d and the number of its bytes, and encryption on/off data indicating whether the data is encrypted. These pieces of information are initial values for defining the operation of the accelerator circuit 101, and are preset by the CPU 102 before the accelerator circuit 101 is operated.

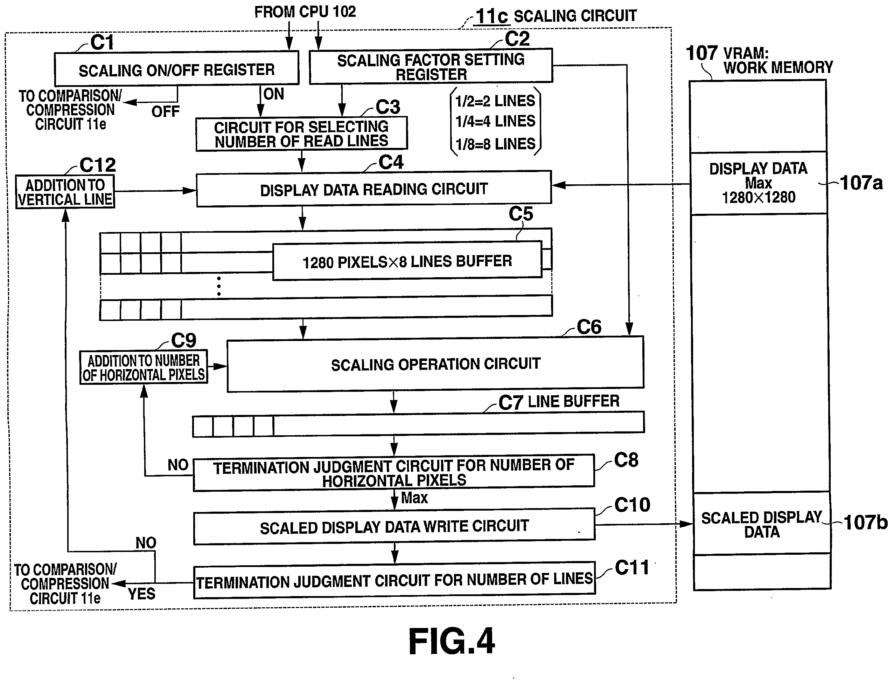

FIG. 4 is a block diagram showing the configuration of the scaling circuit 11c in the accelerator circuit 101 in the server apparatus 10.

This scaling circuit 11c is provided with: a scaling on/off register C1 which stores scaling on/off data output by the CPU 102 depending on whether the client apparatus 20 designates a full display; and a scaling factor setting register C2 in which a scaling factor (1/α: virtual display magnification) is set and stored by the CPU 102 when the scaling is on.

When data indicating scaling is off is stored in the scaling on/off register C1, the scaling processing is not performed by the scaling circuit 11c, and a start signal is output to the comparison/compression circuit 11e.

On the other hand, when data indicating scaling is on is stored in the scaling on/off register C1, a circuit C3 for selecting the number of read lines is started. This circuit C3 for selecting the number of read lines selects the number of lines to be read from the current display data 107a per scaling operation processing in accordance with the scaling factor (1/α: virtual display magnification) set and stored in the scaling factor setting register C2. In the case where the virtual display magnification α designated by the client apparatus 20 is two times, two lines are selected. In the case of four times, four lines are selected. In the case of eight times, eight lines are selected.

A display data reading circuit C4 reads the current display data 107a drawn/generated in the VRAM 107 for the number of read lines (2, 4 or 8 lines) selected by the circuit C3 for selecting the number of read lines, and stores the read current display data 107a in a 1280 × 8 lines buffer C5.

It is to be noted that a memory area for the current display data 107a is set at, for example, 1280 × 800 dots at maximum, and this is used as a frame buffer so that the display data is generated/drawn in an area (Hα × Wα: e.g., the VGA size) corresponding to the size of the display screen of the client apparatus 20 (display structure: H × W) designated by the client apparatus 20 which is enlarged in accordance with the virtual display magnification (α).

Then, the display data for 2, 4 or 8 lines read from the current display data 107a and stored in the 1280 × 8 lines buffer C5 is output to a scaling operation circuit C6.

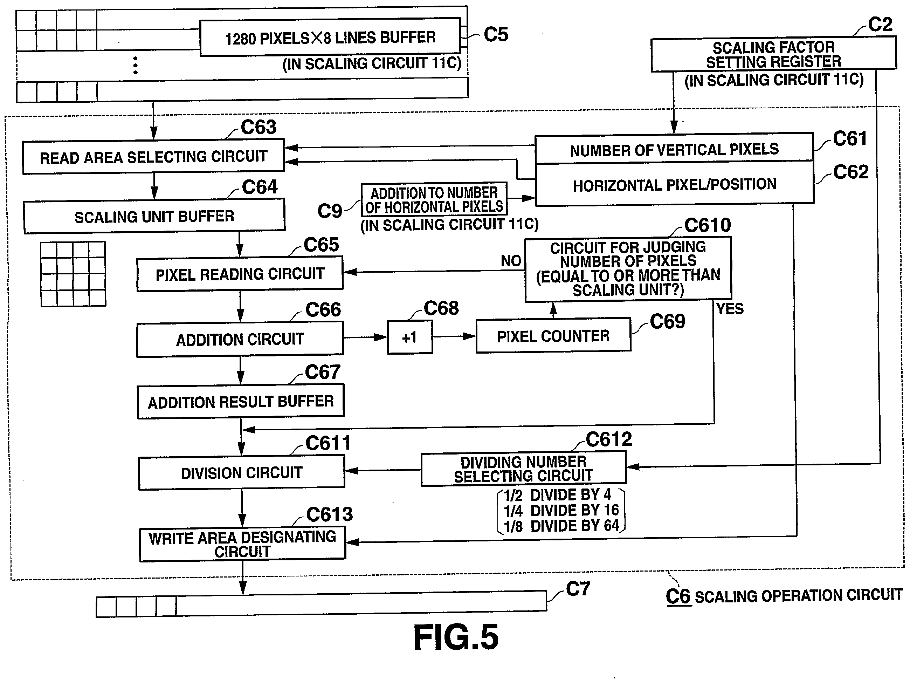

FIG. 5 is a block diagram showing the configuration of the scaling operation circuit C6 in the scaling circuit 11c in the accelerator circuit 101.

This scaling operation circuit C6 is provided with: a register C61 for the number of vertical pixels for designating, as the number of vertical pixels, the display data for α lines stored in the 1280 × 8 lines buffer C5 in accordance with the scaling factor (1/α) set by the scaling factor setting register C2; and a horizontal pixel/position register C62 for designating the number of horizontal pixels corresponding to the number of vertical pixels, and the positions of the horizontal pixels.

A read area selecting circuit C63 selectively reads, as a scaling unit from the display data for α lines stored in the 1280 × 8 lines buffer C5, the vertical pixels × the horizontal pixels designated by the register C61 for the number of vertical pixels and the horizontal pixel/position register C62, and its range (4 × 4 (initial 1 to 4) pixels in the case of a scaling factor of 1/4). The display data (4 × 4 pixels in the case where 1/α = 1/4) of the scaling unit read by the read area selecting circuit C63 is stored in a scaling unit buffer C64.

Then, the display data of the scaling unit stored in this scaling unit buffer C64 is read pixel by pixel by a pixel reading circuit C65, and data for each pixel is added to the display data by an addition circuit C66 and the result is stored in an addition result buffer C67.

A pixel counter C69 is incremented by a plus-one adder C68 every time the addition of one pixel is performed in the addition circuit C66, and a circuit C610 for judging the number of pixels judges whether a counted value in the pixel counter C69 has reached the number of pixels (16 in the case of 4 × 4 pixels) of the scaling unit.

Then, when the circuit C610 for judging the number of pixels judges that the number of pixels of the scaling unit has not been reached yet, the pixel reading circuit C65 repeats the reading of data for one pixel from the scaling unit buffer C64 and the addition thereof.

Subsequently, when the circuit C610 for judging the number of pixels judges that the value counted in the pixel counter C69 has reached the number of pixels of the scaling unit, the addition result of the data for all the pixels of the scaling unit stored in the addition result buffer C67 is output to a division circuit C611, and divided by a dividing number (4 in the case of 1/2, 16 in the case of 1/4, or 64 in the case of 1/8) selected by a dividing number selecting circuit C612 in accordance with the scaling factor (1/α).

In this manner, data, for example, for 4 × 4 pixels of the scaling unit stored in the scaling unit buffer C64 is scaled into data for one pixel and thus reduced to 1/4 (= 1/α). The data for one pixel of the scaling unit after the reduction into 1/α obtained by the division circuit C611 is stored in designated areas on a line buffer C7 sequentially designated from its head position by a write area designating circuit C613 in accordance with the position for reading the horizontal pixels in the horizontal pixel/position register C62.

When the data for one pixel of one scaling unit after the reduction into 1/α is stored in the line buffer C7, a termination judgment circuit C8 for the number of horizontal pixels judges whether the scaling for one scaling unit in the scaling operation circuit C6 has terminated for the data for all the pixels of the display data for α lines read in the 1280 × 8 lines buffer C5.

Then, when the termination judgment circuit C8 for the number of horizontal pixels judges that the scaling for one scaling unit in the scaling operation circuit C6 has not terminated for the data for all the pixels of the display data for α lines read in the 1280 × 8 lines buffer C5, a circuit C9 for updating the number of horizontal pixels updates, for α pixels, the horizontal pixels and the position to be set in the horizontal pixel/position register C62, and the display data (α × α pixels) for the next one scaling unit out of the display data for α pixels read in the 1280 × 8 lines buffer C5 is selected and stored in the scaling unit buffer C64, so that the 1/α scaling processing as described above is carried out.

Thus, the display data for α lines read in the 1280 × 8 lines buffer C5 is sequentially scaled into 1/α every display data (α × α pixels) for one scaling unit, and stored in order starting from the head of the line buffer C7.

Subsequently, when the termination judgment circuit C8 for the number of horizontal pixels judges that the scaling for one scaling unit in the scaling operation circuit C6 has terminated for the data for all the pixels of the display data for α lines read in the 1280 × 8 lines buffer C5, the display data for one line after the scaling at 1/α stored in the line buffer C5 is stored as a scaled display data 107b in the VRAM 107 by a scaled display data write circuit C10.

In this manner, when the display data for one line scaled into 1/α is stored as the scaled display data 107b with regard to the display data for α lines read in the 1280 × 8 lines buffer C5, a termination judgment circuit C11 for the number of lines judges whether the post 1/α scaling display data 107b for the total number of lines which is 1/α of the number of lines of the current display data 107a has been obtained.

When the termination judgment circuit C11 for the number of lines judges that the post 1/α scaling display data 107b for the total number of lines which is 1/α of the number of lines of the current display data 107a has not been obtained, a vertical line updating circuit C12 updates, for α lines, the number of lines of the current display data 107a to be read by the display data reading circuit C4, and the display data for the next α lines is read in the 1280 × 8 lines buffer C5, so that the 1/α scaling processing as described above is carried out.

Then, when the termination judgment circuit C11 for the number of lines judges that the post 1/α scaling display data 107b for the total number of lines which is 1/α of the number of lines of the current display data 107a has been obtained, a start signal is output to the comparison/compression circuit 11e.

That is, this scaling circuit 11c reduces the current display data 107a by scaling it into 1/α adapted to the size of the display screen of the client apparatus 20 (H × W) in the situation where the current display data 107a is drawn/generated as the frame buffer of the area (Hα × Wα) corresponding to the size of the display screen of the client apparatus 20 (H × W) which is enlarged at the virtual display magnification (α). Thus, the full-display scaled display data 107b simply reduced to correspond to the size of the display screen of the client apparatus 20 (H × W) is divided into tiles in accordance with the number of tile divisions obtained by a tile division judgment circuit 11d, and compared with the same tile area of the previous display data 107c transferred to and displayed on the client apparatus 20 during the previous drawing in units of tiles divided by the comparison/compression circuit 11e. Thus, image data of the tile area having a difference (substantially rewritten area) is only compressed, and encrypted by the encryption circuit 11f, and then transferred to the client apparatus 20 as the encrypted data 107e after information regarding a position on the display area, a size, a compression mode, etc., is added thereto.

In addition, when the client apparatus 20 is not compliant with the encrypted display data, the display data in tile units before the encryption by the encryption circuit 11f, that is, immediately after the compression by the comparison/compression circuit 11e is stored as the accelerator processing data 107d into the VRAM 107, and transferred to the client apparatus 20 after the information regarding a position on the display area, a size, a compression mode, etc., is added thereto as described above.

On the other hand, when data indicating scaling is off is stored in the scaling on/off register C1 by the CPU 102 on the basis of the fact that there is no designation for the full display from the client apparatus 20, the reduction of the full display by the scaling is not carried out. Then, the display data in a part of the area corresponding to the position designated by the client apparatus 20 and the display screen size (H × W) is cut as the current display data 107a out of the display data drawn/generated by the frame buffer of the area (Hα × Wα) corresponding to the size of the display screen of the client apparatus 20 (H × W) which is enlarged at the virtual display magnification (α). After processing in the tile division judgment circuit 11d, the comparison/compression circuit 11e and the encryption circuit 11f, the image data in the divided tile area (substantially rewritten area) in which there is a difference between the previous display data 107c and this image data is only compressed and encrypted, and transferred to the client apparatus 20 after the information regarding a position on the display area, a size, a compression mode, etc., is added thereto.

Next, control processing executed by the CPU 102 of the server apparatus 10 of the thin client system having the configuration described above will be explained.

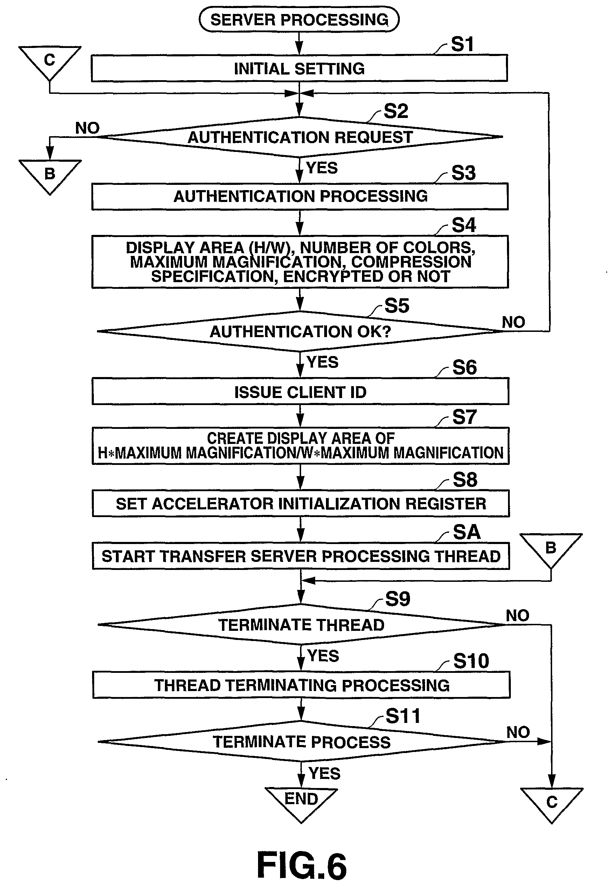

FIG. 6 is a flowchart showing control of overall operation in the server apparatus 10 of the thin client system.

When a power source of the server apparatus 10 is turned on, initial setting is performed, such as the clearance of the work memory and register in each components of the circuit (step S1).

When a connection/authentication request signal is received by the present server apparatus 10 from the client apparatus 20a, 20b, ... (step S2), authentication based on the verification/check of, for example, an ID or a password is carried out for the client apparatus 20a, 20b, ... which has requested the connection (step S3).

In connection with this, there are received, from the client apparatus 20a, 20b, ... which has requested the connection, the size of the display screen of the client apparatus 20a, 20b, ... (display structure: H × W), the number of colors that can be expressed, the virtual display magnification (maximum magnification α), information on the designation of the compression mode, and information on whether the data is encrypted. These are saved in the client management information memory 11M within the accelerator circuit 101 (step S4) .

When the client apparatus 20a, 20b, ... is judged to be OK by the authentication (step S5), an ID of the client apparatus 20a, 20b, ... judged to be OK by the authentication is issued (step S6).

Then, the frame buffer which uses the display screen size (H × W) multiplied by the virtual display magnification (α) as an area for generating the display data is secured in the area of the current display data 107a within the VRAM 107 in accordance with the size of the display screen (display structure: H × W) and the virtual display magnification (maximum magnification: α) that have been saved the client management information memory 11M to correspond to the connected/authenticated client apparatus 20 (step S7). Thus, various registers in the scaling circuit 11c, the tile division judgment circuit 11d, the comparison/compression circuit 11e and the encryption circuit 11f within the accelerator circuit 101 are initialized (step S8).

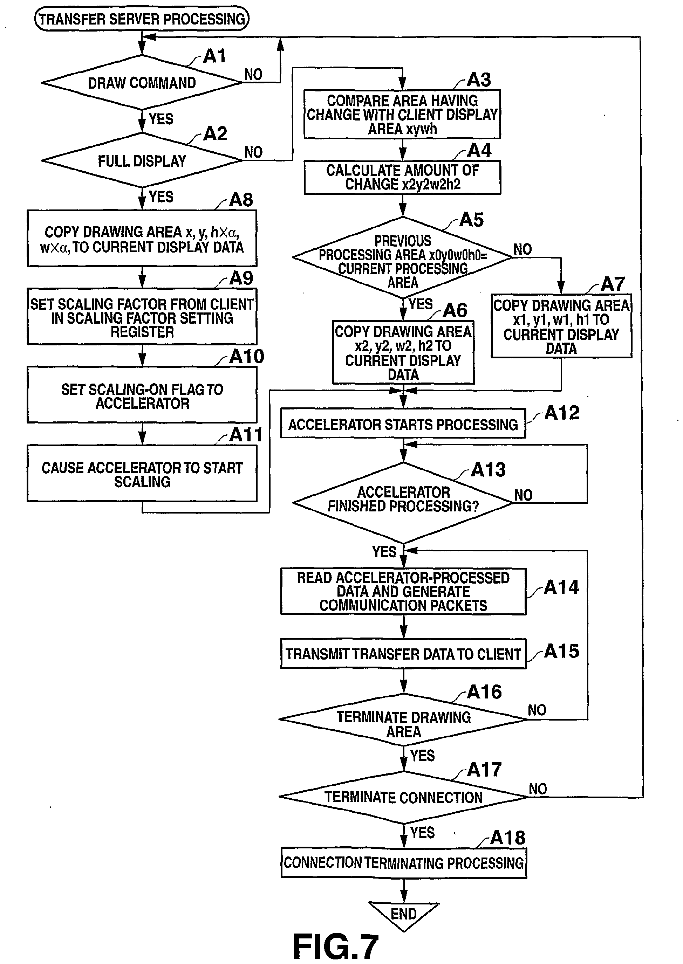

Subsequently, a thread for transfer server processing (see FIG. 7) for each of the connected clients is started, such that the applications are started and executed in response to various requests from the client apparatus 20a, 20b, ..., and the data is generated and transmitted/received accordingly (step SA) .

When a request for disconnection (termination of the tread) is received from the client apparatus 20 being connected (step S9), the generation and transmission/reception of data are carried out with the client apparatus 20 which has requested the disconnection are terminated (step S10).

Subsequently, when the service for each of the client apparatuses 20a, 20b, ... is judged to be terminated (process termination) as a result of the shutdown of the present server apparatus 10 (step S11), the generation and transmission/reception of data carried out with all the client apparatuses 20a, 20b, ... being connected are terminated (End).

FIG. 7 is a flowchart showing the client-by-client transfer server processing (step SA) associated with server processing in the server apparatus 10.

In this transfer server processing, if the CPU 102 generates a command to draw display data corresponding to the client apparatus 20a, 20b, ... being connected when the applications responsive to the various requests from this client apparatus 20 are started and executed and the data is thus generated and transmitted/received accordingly (step A1), it is judged whether the present server apparatus 10 has received, from the client apparatus 20, a full display command to scale the whole area (Hα × Wα) of the display data drawn/generated in the frame buffer (107a) into the size of the display screen of the client apparatus 20 (H × W) for transfer and display, or a real display command to transfer and display the display data of a designated part cut as it is at a position designated by the client apparatus 20 within the whole area (Hα × Wα) of the drawn/generated display data in accordance with the size of its display screen (H × W) (step A2) .

Here, when it is judged that the present server apparatus 10 has received the real display command from the client apparatus 20 (step A2 [NO]), the display data in a client display area (x, y : w × h) cut as it is in accordance with the display screen size (H × W) with reference to a position (X, Y : origin coordinates) designated by the client apparatus 20 out of the whole area (Hα × Wα) of the display data drawn/generated in the frame buffer (107a) is compared with the display data in the client display area (x0, y0 : w0 × h0) in the previous display/drawing stored as the display data 107c (step A3), thereby calculating a rectangular area (x2, y2 : w2 × h2) of the part in which the image has changed (step A4).

Furthermore, when it is judged that the client display area (x, y : w × h) cut this time is the same as the client display area (x0, y0 : w0 × h0) cut in the previous display/drawing, that is, when it is judged that the display area to which the real display command has been issued is the same as the client display area in the previous display/drawing (step A5 [YES]), the display data of the current drawing corresponding to the rectangular area (x2, y2 : w2 × h2) of the part in which the image has changed is only copied as the current display data 107a into the VRAM 107 (step A6).

On the other hand, when it is judged that the client display area (x, y : w × h) cut this time is different from the client display area (x0, y0 : w0 × h0) cut in the previous display/drawing, that is, when it is judged that the display area to which a real display command had been issued has become a different area by scroll (step A5 [NO]), the display data corresponding to a post scroll client display area (x1, y1 : w1 × h1) (= x, y : w × h) cut this time is copied as the current display data 107a into the VRAM 107 (step A7).

That is, in the processing in steps A2 to A7 following the real display command, regarding the display data cut as it is in accordance with the display screen size (H × W) with reference to the coordinates (x, y) of the position designated by the client apparatus 20 out of the display data drawn/generated in the display area (hα × wα) of, for example, the VGA size corresponding to the size of the display screen of the client apparatus 20 (H × W) which is enlarged at the virtual display magnification (α), the display data generated/drawn the previous time in the cut area, and the display data of the rectangular area of the part in which the image has changed are copied into the current display data 107a of the VRAM 107 as updated display data which should be transferred to the client apparatus 20 that has accessed, and rewritten and displayed.

On the other hand, when it is judged that the present server apparatus 10 has received, from the client apparatus 20, the full display command to scale the whole area (Hα × Wα) of the display data drawn/generated in the frame buffer (107a) into the size of the display screen of the client apparatus 20 (H × W) for transfer and display (step A2 [YES]), the display data of the whole drawing area (x, y : wα × hα) is copied as it is as the current display data 107a into the VRAM 107 (step A8).

Then, the virtual display magnification (α) saved in the client management information memory 11M within the accelerator circuit 101 is set in the scaling factor setting register C2 within the scaling circuit 11c (step A9), a scaling-on flag is set in the scaling on/off register C1 (step A10), thereby instructing to start the scaling by the scaling circuit 11c (step A11).

Thus, in the scaling circuit 11c, the whole drawing area (x, y : wα × hα) of the display data drawn/generated in the frame buffer (107a) which is α (virtual display magnification) times the size of the display screen of the client apparatus 20 (H × W) is reduced/scaled into 1/α in accordance with the scaling factor α, and display data for the full display adapted to the size of the display screen of the client apparatus 20 (H × W) is generated, and stored in the scaled display data 107b within the VRAM 107 as the updated display data which should be transferred to the client apparatus 20 and rewritten and displayed.

Thus, the updated display data cut as it is and generated out of the display data drawn in the display area (ha × wα) of, for example, the VGA size in accordance with the size of the display screen of the client apparatus 20 (h × w) is stored as the current display data 107a into the VRAM 107 by software processing following the real display command (steps A2 to A7). Alternatively, the updated display data generated from the display data drawn in the display area (ha × wα) of, for example, the VGA size while being reduced and scaled in accordance with the size of the display screen of the client apparatus 20 (h × w) is stored as the scaled display data 107b into the VRAM 107 by the operation of the scaling circuit 11c following the full display command (steps A2 → A8 to A11). Then, the generation of the display data to be transferred in the accelerator circuit 101 (the tile division judgment circuit 11d, the comparison/compression circuit 11e and the encryption circuit 11f) is started on the basis of the real-display updated display data stored as the current display data 107a or the full-display updated display data stored as the scaled display data 107b.

Then, the updated display data is divided into tiles in accordance with the number of tile divisions obtained by the tile division judgment circuit 11d, and compared with the same tile area of the previous display data 107c transferred to and displayed on the client apparatus 20 during the previous drawing in units of tiles divided by the comparison/compression circuit 11e so that the image data in the tile area (substantially rewritten area) in which there is a difference between the previous display data 107c and this image data is only compressed, whereby the updated display data is stored as the accelerator processing data 107d into the VRAM 107. Further, when an encryption ON flag is set in the client management information memory 11M, the updated display data is encrypted by the encryption circuit 11f, and stored as the encrypted data 107e into the VRAM 107 (steps A12 and A13).

Thus, the encrypted data 107e in which the updated display data of the tile area having a difference of the image data in units of divided tiles is only compressed and encrypted is read as accelerator-processed data, and communication packets are generated as transfer data for one tile to which header there area added information on a position on the play area (h × w) of the client apparatus 10 (coordinates), a compression mode and a client ID of a transfer end (step A14), so that the communication packets are transmitted/transferred to the client apparatus 20 of the ID indicated by this header (step A15). It is to be noted that the image tiles in which all the image pixels for one tile (T) have been converted into the penetration color data S are not transmitted/transferred to the client apparatus 20 in step A15. The configuration has been described in the above example wherein the common area for storing the previous display data 107c following the real display command or the full display command is provided within the VRAM 107. As another example, the areas for storing the previous display data following the real display command or the full display command may be independently provided within the VRAM 107. In such a configuration, the comparison/compression circuit 11e in the accelerator circuit 101 reads the previous display data from the storage area corresponding to the real display command in the case of the real display command and compares the previous display data with the current display data, or reads the previous display data from the storage area corresponding to the full display command in the case of the full display command and compares the previous display data with the current display data. The comparison/compression circuit 11e only compresses the image data of the tile area in which there is a difference between the previous display data and this image data, and stores the image data as the accelerator processing data 107d into the VRAM 107. In such a configuration, even immediately after the full display and the real display are interchanged, it is possible to detect a difference between the current display data and the previous display data, and reduce the amount of data transferred to the client apparatus 20. It is to be noted that, in this case, the client apparatus 20 also stores the display data of the previous screens for the cases of the full display and the real display.

Then, when it is judged that the generation and transfer of the communication packets for all the divided tiles data are not finished for the accelerator-processed data read in step A14 (step A16 [NO]), the reading of the next data of the accelerator-processed data and the generation of the communication packets are repeated (step A14), and the data is sequentially transmitted/transferred to the client apparatus 20 of the ID indicated by the header (step A15) .

Subsequently, when it is judged that all the accelerator-processed data have been transmitted/transferred to the client apparatus 20 (step A16 [YES]), it is judged whether a signal indicating the termination of connection has been received from the client apparatus 20 being connected (step A17).

Then, when it is judged that the connection is not to be terminated, a return is made to the processing starting from step A1 to bring a standby state for the drawing/generation of the next display data (steps A17 → A1). When it is judged that the connection is to be terminated, the generation and transmission/reception of data carried out with the client apparatus 20 which has requested the connection are terminated (step S18).

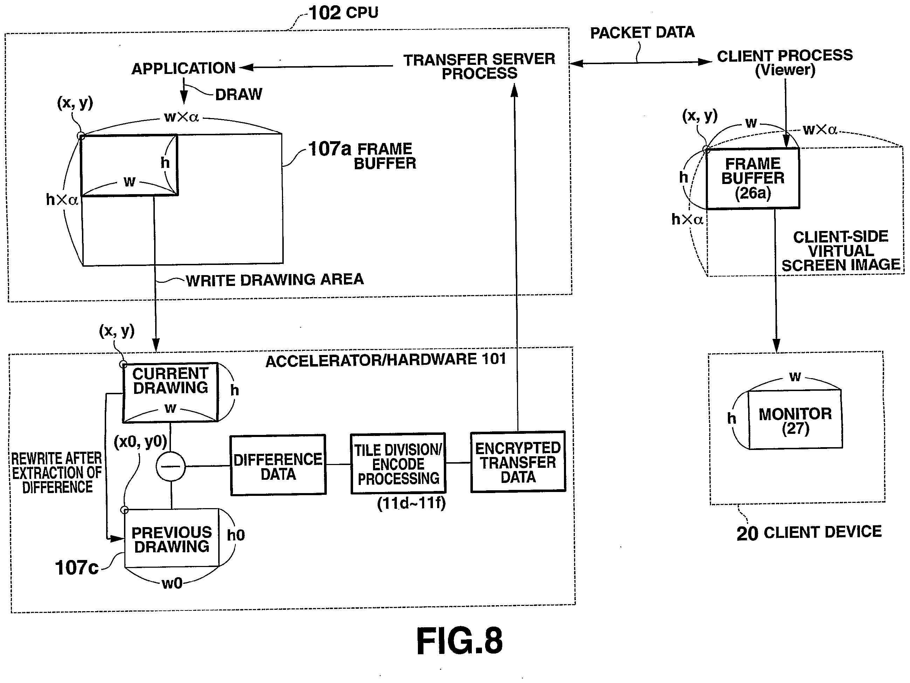

FIG. 8 is a diagram showing an image (No. 1) of a procedure of generating transfer display data in accordance with the real display command associated with the transfer server processing in the server apparatus 10.

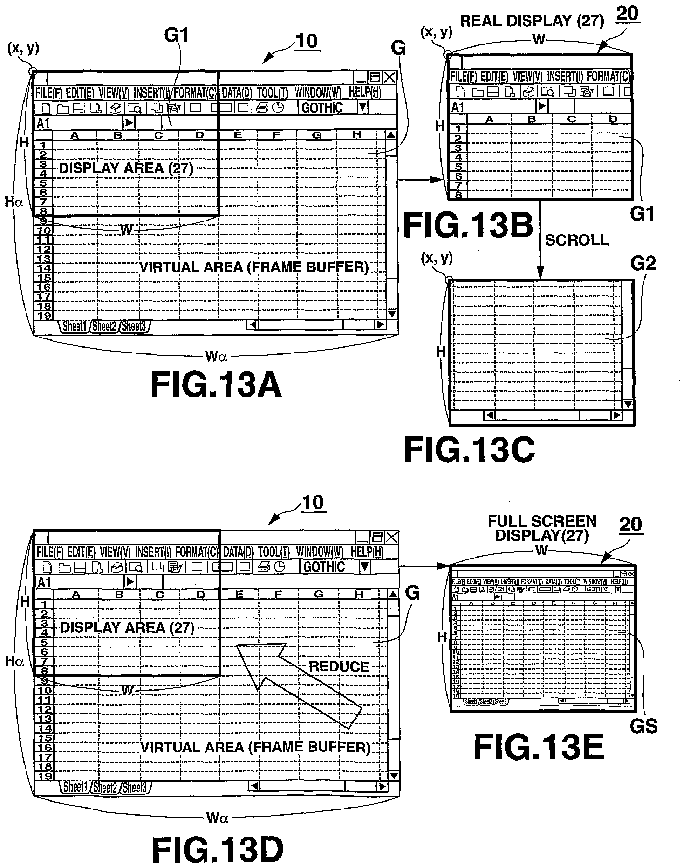

In this image (No. 1) of the procedure of generating the transfer display data in accordance with the real display command in FIG. 8, there is shown a case where the whole image data of the current drawing area (x, y : h × w) cut in accordance with the size of the display screen of the client apparatus 20 (h × w) and its designated display position (x, y) on the frame buffer (ha × wα) of, for example, the VGA size is rewritten at the same position as the previous drawing area (x0, y0 : h0 × w0). In this case, the display data in the current drawing area (x, y : h × w) cut out from the frame buffer (ha × wα) is written as it is as current drawing data. The accelerator circuit 101 extracts a difference between the current drawing data and the previous drawing data in units of the divided tiles, and converts the pixel data with no difference into penetration color data indicating that no rewriting is needed, and then encrypts the penetration color data. The data is transferred to the client apparatus 20 and displayed on its display device (h × w) 27 (see FIG. 13A → FIG. 13B).

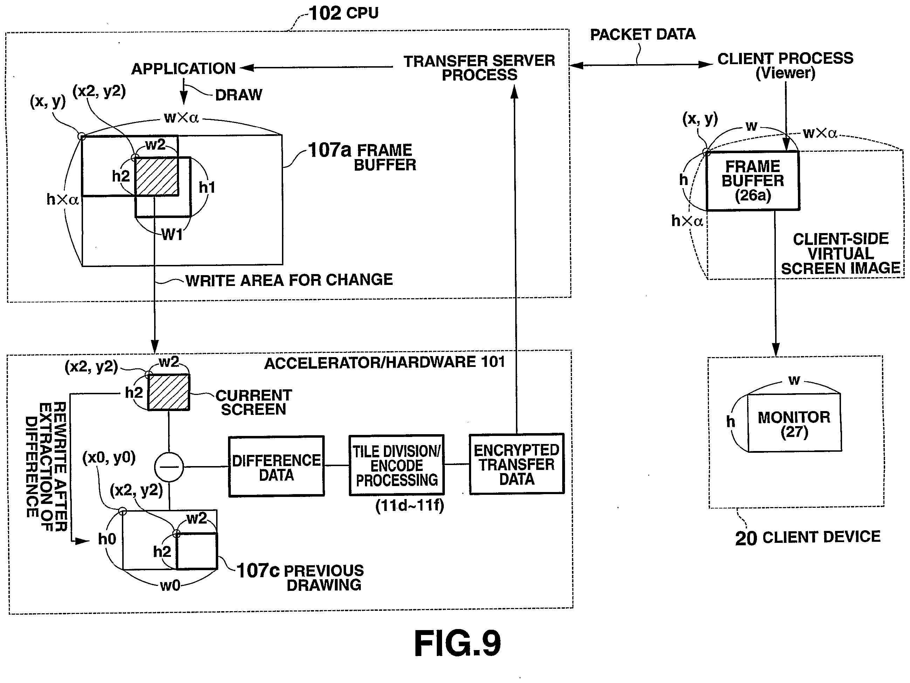

FIG. 9 is a diagram showing an image (No. 2) of the procedure of generating the transfer display data in accordance with the real display command associated with the transfer server processing in the server apparatus 10.

In this image (No. 2) of the procedure of generating the transfer display data in accordance with the real display command in FIG. 9, there is shown a case where a part of the current drawing area (x, y : h × w) cut in accordance with the size of the display screen of the client apparatus 20 (h × w) and its designated display position (x, y) on the frame buffer (ha × wα) of, for example, the VGA size is rewritten at the same position as the previous drawing area (x0, y0 : h0 × w0). In this case, the display data in a part with an image change (x2, y2 : h2 × w2) out of the current drawing area (x, y : h × w) cut out from the frame buffer (hα × wα) is written as it is as current drawing data. The accelerator circuit 101 extracts a difference between the current drawing data and the previous drawing data in units of the divided tiles, and converts the pixel data with no difference into penetration color data indicating that no rewriting is needed, and then encrypts the penetration color data. The data is transferred to the client apparatus 20 and displayed so that the same area (x2, y2 : h2 × w2) on its display device (h × w) 27 is rewritten.

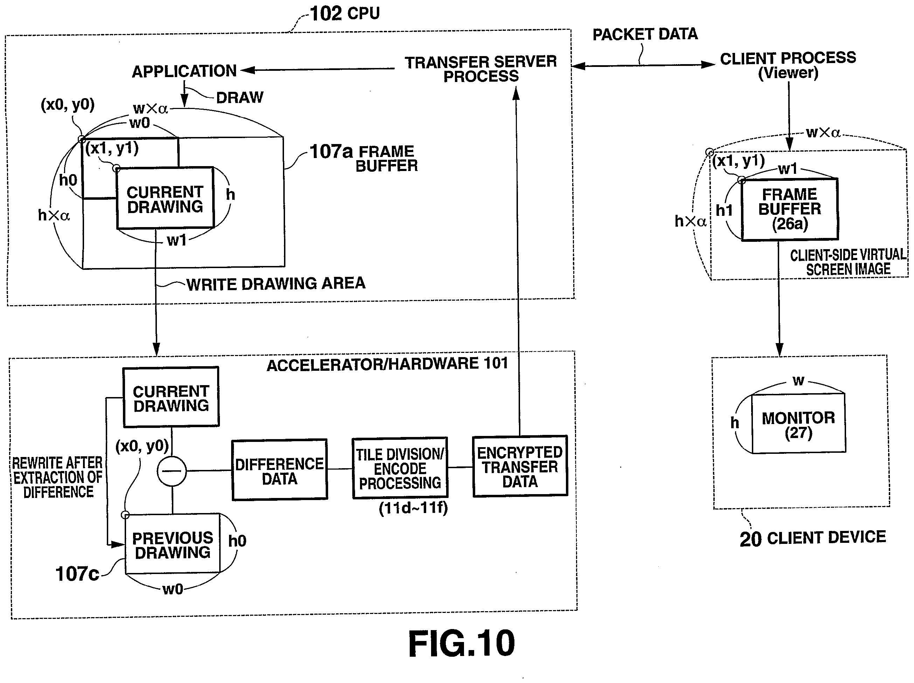

FIG. 10 is a diagram showing an image (No. 3) of the procedure of generating the transfer display data in accordance with the real display command associated with the transfer server processing in the server apparatus 10.

In this image of the procedure of generating the transfer display data in accordance with the real display command in FIG. 10, there is shown a case where the current drawing area (x1, y1 : h1 × w1) cut in accordance with the size of the display screen of the client apparatus 20 (h × w) and its designated display position (x, y) on the frame buffer (hα × wα) of, for example, the VGA size becomes a different display area due to a scroll instruction from the previous drawing area (x0, y0 : h0 × w0), and the whole image data of the scrolled current drawing area is rewritten. In this case, the display data in the current drawing area (x1, y1 : h1 × w1) cut out from the frame buffer (ha × wα) is written as it is as current drawing data. The accelerator circuit 101 extracts a difference between the display data and the previous drawing data in units of the divided tiles, and converts the pixel data with no difference into penetration color data indicating that no rewriting is needed, and then encrypts the penetration color data. The data is transferred to the client apparatus 20 and displayed on its display device (h × w) 27 (see FIG. 13A → FIG. 13C).

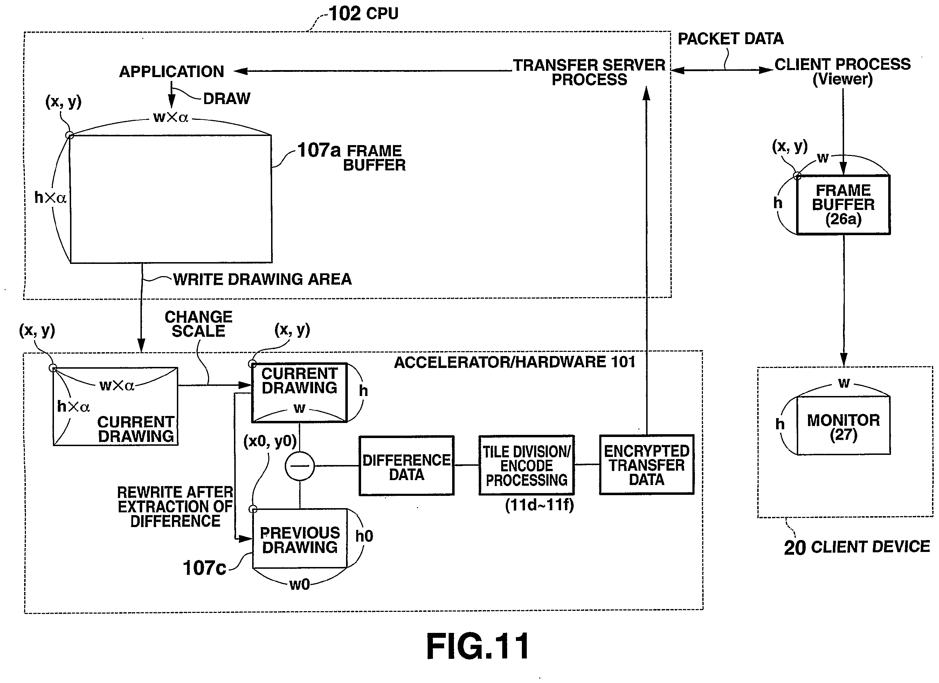

FIG. 11 is a diagram showing an image of a procedure of generating transfer display data in accordance with a full display command associated with the transfer server processing in the server apparatus 10.

In this image of the procedure of generating the transfer display data in accordance with the full display command in FIG. 11, the display data drawn/generated in the frame buffer (hα × wα) of, for example, the VGA size is scaled/reduced into the size of the display screen of the client apparatus 20 (h × w) by the scaling circuit 11c and written as current drawing data. The accelerator circuit 101 extracts a difference between the current drawing area and the previous drawing data in units of the divided tiles, and converts the pixel data with no difference into penetration color data indicating that no rewriting is needed, and then encrypts the penetration color data. The data is transferred to the client apparatus 20 and displayed on its display device (h × w) 27 (see FIG. 13D → FIG. 13E).

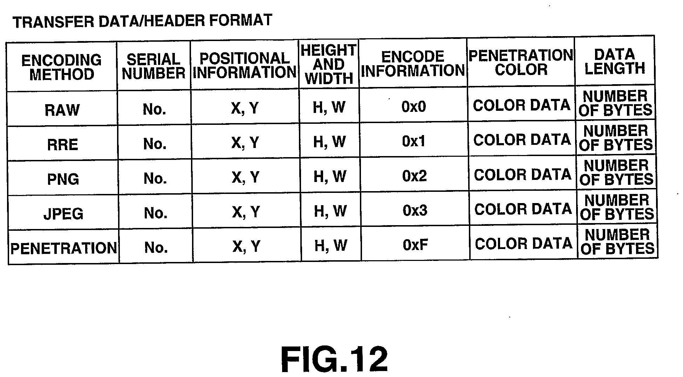

FIG. 12 shows a transfer data format of the accelerator-processed data generated in association with the transfer server processing in the server apparatus 10.

The communication packets of the accelerator-processed data generated in association with the transfer server processing in the server apparatus 10 are created as transfer data to which there are added as a header its compression (encoding) mode, a packet serial number (No.), information on the position of the origin (X, Y), an image size (H, W), encode information, a penetration color code, a data length, and a client ID of a transfer end. The communication packets are transmitted/transferred to the client apparatus 20 of the ID indicated by this header.

FIGS. 13A through 13E are diagrams showing how the display data is generated for the client apparatus 20 associated with the transfer server processing in the server apparatus 10, wherein 13A, 13B and 13C are diagrams showing how the display data is generated in accordance with the real display command from the client apparatus 20, and 13D and 13E are diagrams showing how the display data is generated in accordance with the full display command from the client apparatus 20.

Therefore, according to the server apparatus 10 having the configuration described above, when client management information (11M) including the display screen size (H × W) and the virtual display magnification (α) for changing the display screen size (H × W) into, for example, the VGA size is received from the client apparatus 20 being connected, display data G generated by the processing of an operating application is drawn in the drawing area (hα × wα: frame buffer) corresponding to the size of the display screen of the client apparatus 20 (H × W) which is enlarged at the virtual display magnification (α), as shown in FIG. 13A. Then, when the real display command containing the display position information (x, y) is received from the client apparatus 20, display data G1 of the area corresponding to the size of the display screen of the client apparatus 20 (H × W) whose origin coordinates are based on the information on the display position (x, y) on the drawing area (hα × wα) is cut as it is, and transferred to the client apparatus 20 after the accelerator processing, and then displayed/output as shown in FIG. 13B (or FIG. 13C after scrolling). Further, when the full display command is received from the client apparatus 20, the full display data on the drawing area (hα × wα) is scaled (reduced) in accordance with the size of the display screen of the client apparatus 20 (H × W) by the scaling circuit 11c as shown in FIG. 13D, and transferred to the client apparatus 20 after the accelerator processing, and then displayed/output as full screen display data Gs as shown in FIG. 13E. Thus, even when the connected client apparatus 20 is, for example, a PDA, and the size of its display screen is longitudinally and laterally much less than the VGA size, the display data can be generated and transferred to the client apparatus 20 so that an original data display area (cell area) can be displayed as widely as possible and in an easy-to-view manner without the occupation of a large space within the display screen by the area for user operation including menu icons, tool bars, etc., in a table display screen.

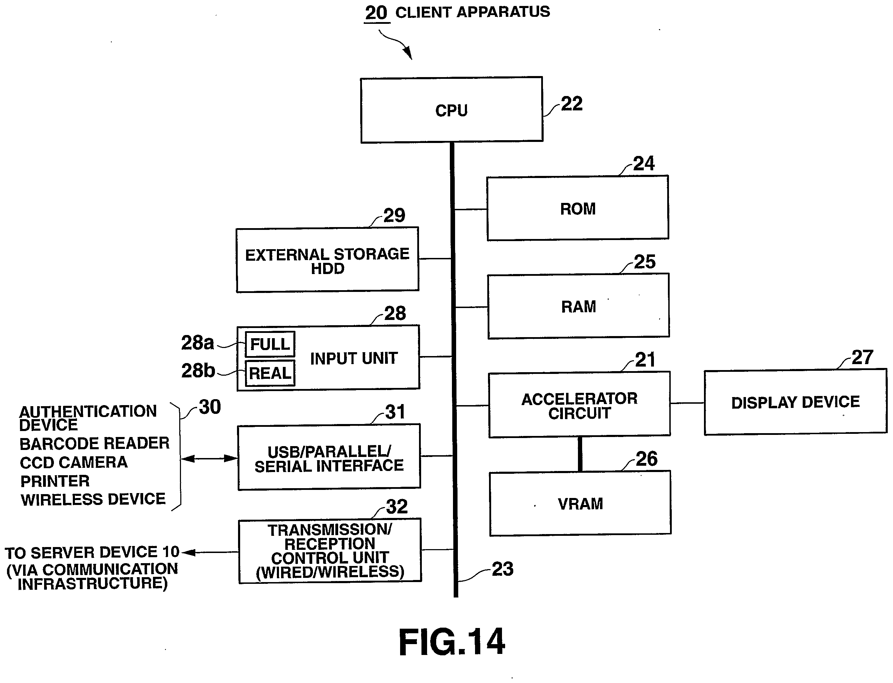

FIG. 14 is a block diagram showing the circuit configuration of the client apparatus 20 in the thin client system.

The client apparatus 20 comprises a CPU 22 as a computer to which a ROM 24 and a RAM 25 are connected via a bus 23 and an accelerator circuit 21 is also connected. A VRAM 26 is mounted on this accelerator circuit 21. The drawing data transferred from the server apparatus 10 and written in the VRAM 26 is output to/displayed on the display device 27.

Furthermore, to the CPU 22, there are connected, via the bus 23, an input unit 28 such as a keyboard, an external storage hard disk drive (HDD) 29, a USB/parallel/serial interface 31 for connecting various external devices 30 such as an authentication device, a bar code reader, a CCD camera, a printer and a wireless device, and a control unit (wired/wireless) 32 for transmission to/reception from the server apparatus 10.

The input unit 28 comprises: a "full display" key 28a for the full display command to transfer the display data drawn by application processing in the server apparatus 10 and transferred to the present client apparatus 20 after scaling the whole drawing area of the display data in accordance with the size of the display screen of the client apparatus 20 (H × W); and a "real display" key 28b for the real display command to cut the drawing area corresponding to the size of the display screen of the client apparatus 20 (H × W) as it is at the position designated by the user operation out of the whole drawing area of the display data and then transfer this drawing area.

The CPU 22 controls the operation of the components of the circuits using the RAM 25 as a work memory in accordance with a system program stored in the ROM 24 in advance. This system program is started and executed in response to a key input signal from the input unit 28, an application reply signal from the server apparatus 10 received via the transmission/reception control unit 32, or transferred drawing data.

In this client apparatus 20, various kinds of data generated by executing the application program in the server apparatus 10 are suitably read and stored in the external storage HDD 29, and the display drawing data which has been generated and transferred is decoded in the accelerator circuit 21, written into the VRAM 26, and displayed/output on the display device 27.

Out of the display drawing data which has been drawn/generated in the server apparatus 10 and transferred to the client apparatus 20, the drawing data of a part (having a difference) different from the previous drawing data due to the updating of the drawing data is only extracted and transferred together with its drawing position information. Therefore, on the side of this client apparatus 20, the display is updated only by writing the display drawing data decompressed and decrypted in the accelerator circuit 21 into a frame buffer 26a within the VRAM 26 in accordance with its drawing position information and rewriting the display drawing data.

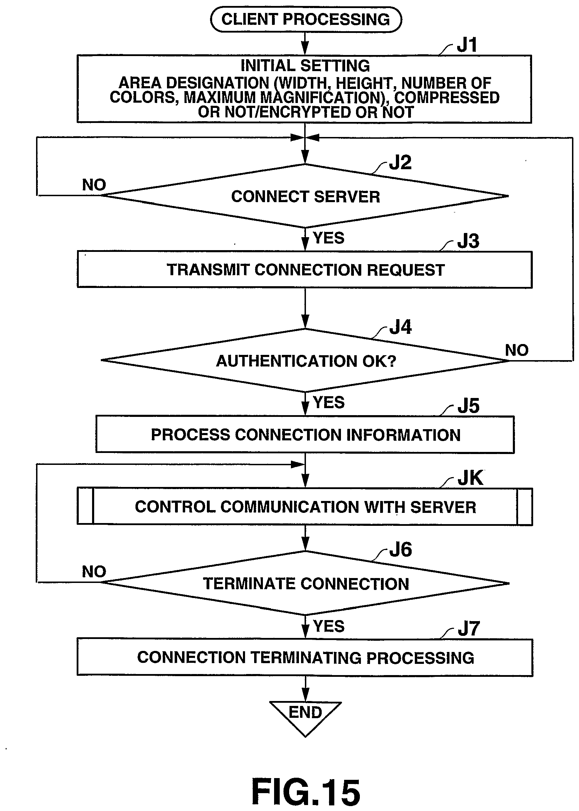

FIG. 15 is a flowchart showing control of overall operation in the client apparatus 20 of the thin client system.

When the power is applied, various kinds of initial settings are carried out, such as setting of management information (area designation information [a width W, a height H, the number of colors that can be displayed, and the virtual display magnification (maximum magnification α)], and encode information [compressed or not/encrypted or not]) to be reported to the server apparatus 10 with regard to the display function of the client apparatus 20 (step J1).

Then, a signal for requesting connection and authentication is transmitted to the server apparatus 10 together with the client management information (steps J2 and J3).

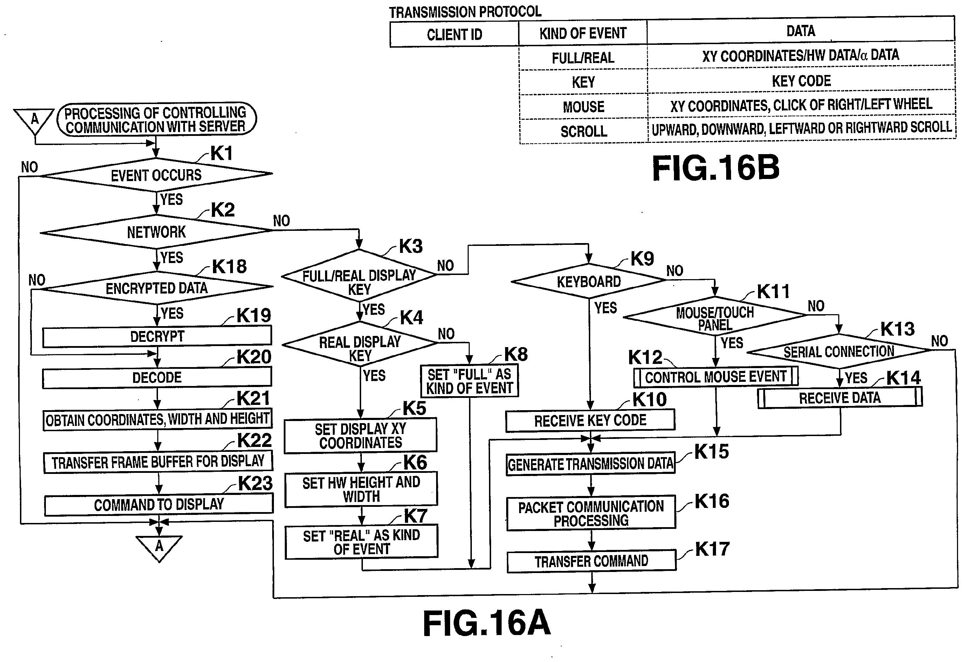

Subsequently, a signal indicating the acceptance as a result of the authentication is reported from the server apparatus 10 and an issued client ID is received, so that the processing of information on the connection with the server apparatus 10 is established (steps J4 → J5). Then, the transition is made to processing (step JK) for controlling a communication with the connected server apparatus 10 in FIG. 16, and the applications are started and executed in the server apparatus 10 in response to various requests from the present client apparatus 20, and the data is thus generated and transmitted/received accordingly.

Subsequently, when the termination of the connection with the server apparatus 10 is indicated in accordance with the user operation or when a signal for terminating the connection is received from the server apparatus 10 (step J6), the processing of controlling the communication with the server apparatus 10 is terminated (step J7).

FIGS. 16A and 16B show processing (step JK) of controlling the communication with the server apparatus 10 in the client apparatus 20; wherein 16A is a flowchart of the communication controlling processing of the client apparatus 20, and 16B shows a transmission protocol for the server apparatus 10.

When the connection with the server apparatus 10 is established, a standby state for the occurrence of an event is created (step K1).

When the "full display" key 28a in the input unit 28 is operated to perform the full display of the display data generated/drawn in, for example, the VGA size by the application processing in the server apparatus 10 by scaling the display data into the size of the display screen of the present client apparatus 20 (H × W) (step K3), "full" indicating the full display command as a kind of event matching to the ID of the present client is set as a transmission protocol (steps J4 → J5), and transmission data to which data on the display screen size (H × W) and the virtual display magnification (α) are added is generated (step K15), processed for a packet communication (step K16), and transmitted to the server apparatus 10 by a transfer command (step K17).

When the "real display" key 28b in the input unit 28 is operated to perform the real display of the display data generated/drawn in, for example, the VGA size by the application processing in the server apparatus 10 by cutting the display data in accordance with the size of the display screen of the present client apparatus 20 (H × W) at a position selected by the user (steps J3 → J4), "real" indicating the real display command as a kind of event matching to the ID of the present client is set as a transmission protocol, and transmission data to which data on the origin coordinates (X, Y :) indicating the display position, the size of the display screen of the client apparatus 20 (H × W) and the virtual display magnification (α) are added (steps K5 to K7) is generated (step K15), processed for a packet communication (step K16), and transmitted to the server apparatus 10 by a transfer command (step K17).

Then, when the keyboard in the input unit 28 is operated so that its key code is received by the CPU 22 (steps J9 → J10), "Key" is set as a kind of event matching to the ID of the present client to serve as a transmission protocol, and transmission data to which data for the received key code is added is generated (step K15), processed for a packet communication (step K16), and transmitted to the server apparatus 10 by a transfer command (step K17).

Furthermore, when a mouse/touch panel in the input unit 28 is operated so that designated coordinates on the display screen are detected by the CPU 22, or when click signals of right and left wheels are received, or when a signal for scrolling in a vertical/horizontal direction is received (steps J11 → J12), "Mouse" or "Scroll" is set as a kind of event matching to the ID of the present client to serve as a transmission protocol, and transmission data to which data on X, Y coordinates indicating the designated coordinates, data on a right/left click, or data on a scrolling direction is added is generated (step K15), processed for a packet communication (step K16), and transmitted to the server apparatus 10 by a transfer command (step K17).

Still further, when the various external devices are connected via the USB/parallel/serial interface 31 so that data from the external devices are received by the CPU 22 (steps J13 → J14), the received data are subjected to protocol conversion and generated as transmission data (step K15), processed for a packet communication (step K16), and transmitted to the server apparatus 10 by a transfer command (step K17).

Further yet, when the display drawing data transmitted/transferred from the server apparatus 10 is received via a network N (LAN) (step K2), the accelerator circuit 21 analyzes a TCP-IP header. If the data is encrypted data (step K18), the accelerator circuit 21 decrypts the data (step K19), and uncompresses the data in accordance with a designated compression mode (step K20).

Thus, coordinates indicating the display position of the received and decoded display drawing data, and an area size are obtained (step K21), and a corresponding area of the display frame buffer 26a within the VRAM 26 is rewritten accordingly (step K22).

Then, a display command is output in the accelerator circuit 21, and the display screen data is updated on the basis of the display drawing data written in the VRAM 26 (step K23).

Thus, when the real display command containing the display position information (x, y) is transmitted from the client apparatus 20, the server apparatus 10 cuts, as shown in FIG. 13A, display data (Gl) of the area corresponding to the size of the display screen of the client apparatus 20 (H × W) whose origin coordinates are based on the display position information (x, y) from the display data (G) on the drawing area (hα × wα) of, for example, the VGA size generated/drawn in accordance with the virtual display magnification (α) is cut as it is, such that the display data is transferred to and displayed on the client apparatus 20 as shown in FIG. 13B or 13C. Further, when the full display command is transmitted from the client apparatus 20, the full display data (G) on the drawing area (hα × wα) is scaled (reduced) in accordance with the size of the display screen of the client apparatus 20 (H × W) in the server apparatus 10 as shown in FIG. 13D, and transferred to and displayed on the client apparatus 20 as shown in FIG. 13E. Thus, even when the client apparatus 20 is, for example, a PDA, and the size of its display screen is longitudinally and laterally much less than the VGA size, the original data display area (cell area) can be displayed as widely as possible and in an easy-to-view manner without the occupation of a large space within the display screen by the area for user operation including the menu icons, tool bars, etc., in the table display screen.

In addition, in the configuration of the embodiment described above, the drawing area of, for example, the VGA size corresponding to the size of the display screen of the client apparatus 20 (H × W) which is multiplied by the virtual display magnification (α) is set by the server apparatus 10 in accordance with the virtual display magnification (α) preset by the client apparatus 20a, 20b, ... such that the display data is drawn/generated. However, it is also possible to have a configuration in which the virtual display magnification (α) is arbitrarily set by the user of each of the client apparatuses 20a, 20b, ..., or a configuration in which the display data is drawn/generated in a drawing area which is set in the server apparatus 10 by enlarging the size of the display screen of the client apparatus 20a, 20b, ... (H × W) of a predetermined magnification, regardless of the drawing area of a fixed size such as the VGA size.

All methods of various kinds of processing by the server apparatus 10 described in the above embodiment, that is, methods of processing such as the overall operation control processing shown in the flowchart of FIG. 6 and the transfer server processing for each client shown in the flowchart of FIG. 15 can be stored as a program executable by a computer in an external recording medium such as a memory card (such as a ROM card or a RAM card), a magnetic disk (such as a floppy disk or a hard disk), an optical disk (such as a CD-ROM or a DVD) or a semiconductor memory, and then distributed. Then, the computer (CPU 102) of the server apparatus 10 reads the program stored in this external recording medium into the storage device (110), and has its operation controlled by the read program, thereby achieving the processing of the generation of the display drawing data and the transfer thereof during the drawing/update responsive to the full display command or the real display command from the client apparatus 20 described in the above embodiment, and making it possible to execute the similar processing according to the technique described above.

Furthermore, data on the program for achieving the techniques described above can be transmitted on the communication network (LAN) N in the form of a program code, and the program data is loaded from the computer device (program server) connected to the communication network (LAN) N via the transmission/reception control unit 111 and then stored in the storage device (110), such that it is possible to achieve the processing of the generation of the display drawing data and the transfer thereof during the drawing/update responsive to the full display command or the real display command from the client apparatus 20 described above.

It is to be noted that the invention of the present application is not limited to the embodiment described above, and various modifications can be made without departing from the spirit thereof at the stage of carrying out the invention. The embodiment described above includes inventions at various stages, and suitable combinations of a plurality of disclosed constitutional requirements permit various inventions to be extracted. For example, when the problems described in the section Background Art can be solved and the advantages described in the section DISCLOSURE OF THE INVENTION can be obtained even if some of all the constitutional requirements shown in the embodiment are eliminated or even if some of the constitutional requirements are combined, a configuration in which those constitutional requirements are eliminated or combined can be extracted as an invention.

Next, a second embodiment of the present invention will be described in detail. A block diagram showing a schematic configuration of a computer system comprising the server apparatus 10 according to the embodiment of the present intention and a plurality of client apparatuses 20a, 20b, ... (hereinafter indicated representatively as 20) is similar to FIG. 1, and will not be described.

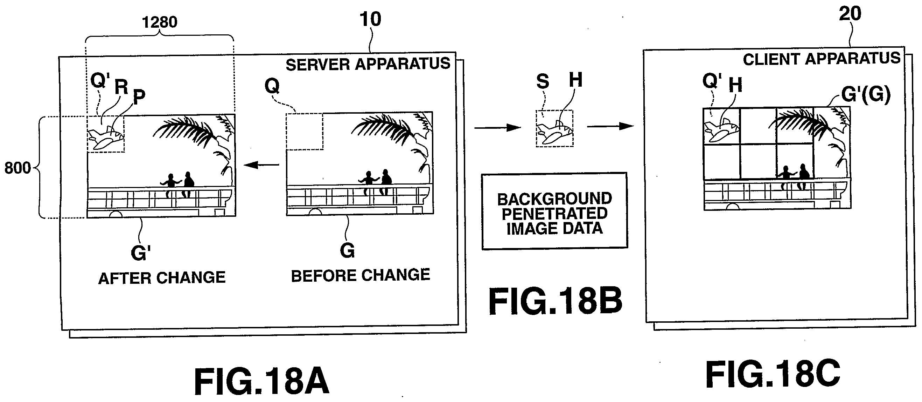

FIGS. 18A, 18B and 18C are diagrams showing how the drawing data generated in the server apparatus 10 of the present computer system is transferred to and displayed on the client apparatus 20; wherein 18A is a diagram showing how the drawing data changes in the server apparatus 10, 18B is a diagram showing the transfer display data during the change of the drawing data, and 18C is a diagram showing how the transferred drawing data is displayed/output in the client apparatus 20.

In the server apparatus 10, when drawing data (before change) G already generated in accordance with the working application program and transferred to the client apparatus 20 changes into drawing data (after change) G' along with the operation of the application program, an area Q' corresponding to a changed part P of the drawing data G' after change is first cut out, and the drawing data in this cut area Q' is converted into transfer drawing data H as shown in FIG. 18B by the accelerator circuit 101.

The accelerator circuit 101 performs image comparison between the area Q' cut out of the drawing data G' after change in accordance with its changed part P and the same area Q in drawing data G before change in order to convert a background matching area R therein into transmitted drawing data S (penetration color data which does not need to be rewritten), thereby generating the transfer drawing data H. The client apparatus 20 which has received this transfer drawing data H writes the newly received transfer drawing data H except for the transmitted image data S at a coordinate position corresponding to the area Q' with the image change on the already received and displayed drawing data G before change, so that the transfer drawing data H can be displayed including the drawing data G' after change.

In addition, the transfer drawing data H generated by the accelerator circuit 101 of the server apparatus 10 is transferred after compressed by a compression mode suitable in terms of both compression efficiency and image quality selected in accordance with the contents (the number of colors) of the drawing data and the state of a communication (response speed) with the client apparatus 20 at that point, so that it is possible to further reduce the amount of transferred drawing data without decreasing the drawing quality.

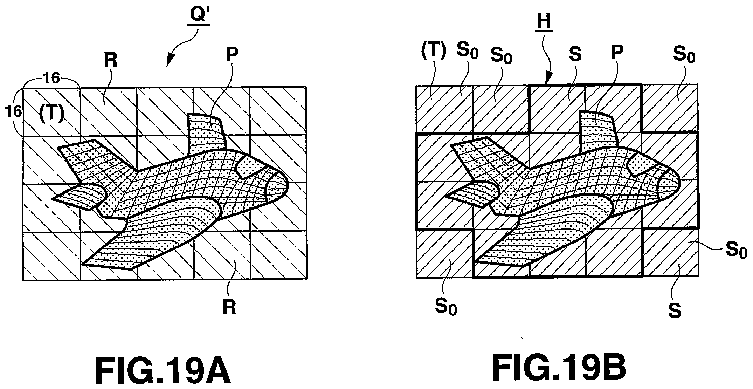

FIGS. 19A and 19B are diagrams showing in detail the transfer drawing data H generated by the accelerator circuit 101 on the basis of the area Q' of the drawing data G' after change in the server apparatus 10 of the present computer system.

For example, as shown in FIG. 18A, when the area size of the drawing data G (G') for one screen processed in the server apparatus 10 is 1280 × 800 pixels, the area Q' including the image change part P in the drawing data G' after change is cut out with reference to a tile unit in which 16 × 16 pixels = 1 tile (T), as shown in FIG. 19A.

It is to be noted that the areas of tiles T for one line in a horizontal direction are collectively called one block in the area Q' including the image change part P in the drawing data G' after change.

Moreover, the area Q' is a rectangular area Q' in which the image change part P is cut out in the horizontal and vertical directions, but may also be a zonal area Q' in which the size (lateral) of the area cut out only in the horizontal direction is the size of the area of the drawing data G (G') itself.

The accelerator circuit 101 performs image comparison of the area Q' including the image change part P with the area Q at the same position in the drawing data G before change in units of tiles, and converts image pixels of the background matching area R therein into the transmitted drawing data S (color data which does not need to be rewritten), as shown in FIG. 19B. Then, a penetration color tile So in which the whole area of one tile (T) has been converted into the transmitted drawing data S is not transferred, and the tiles including the image change part P alone are transferred to the client apparatus 20 together with the coordinate positions of these tiles on the display screen after the areas having differences with respect to the drawing data G before change are compressed by a suitable compression mode. As a result, the part corresponding to the transfer drawing data H out of the area Q' including the image change part P is transferred to the client apparatus 20.

An accelerator circuit 201 of the client apparatus 20 decodes the transfer drawing data H transferred after compressed in units of tiles with respect to the drawing data G before change, and then writes the transfer drawing data H at the coordinate positions of the tiles by simply removing the image pixels converted into the transmitted drawing data S, thereby making it possible to display the drawing data G' after change generated in the server apparatus 10.

The generated transfer drawing data H is suitably compressed and encrypted and then transferred to the client apparatus 20 in the accelerator circuit 101 of the server apparatus 10, and in the compression mode such as graphics interchange format (GIF)/portable network graphics (PNG), the compression efficiency can be increased without decreasing image quality if image pixels constituting image data to be compressed are more adjacent and continuous from each other in the same color. Thus, the compression ratio in the area of the drawing data converted to the transmitted drawing data S within the transfer drawing data H as described above is significantly high.

Therefore, it is possible not only to significantly reduce the amount of drawing data transferred from the server apparatus 10 to the client apparatus 20 without decreasing the drawing quality, but also to generate and compress the transfer drawing data H in the accelerator circuit 101 as hardware, so that a processing load in the server apparatus 10 can be drastically reduced, and, for example, the addition of the client apparatuses 20a, 20b, ... can be facilitated.

The circuit configuration of the server apparatus 10 in the present computer system is similar to that in FIG. 2 and will not be described.

The configuration of the accelerator circuit 101 in the server apparatus 10 of the present computer system is similar to that in FIG. 3, and the configuration of the scaling circuit 11c shown in FIG. 3 is also similar to that in FIG. 4, and moreover, the configuration of the scaling operation circuit C6 shown in FIG. 4 is also similar to that in FIG. 5, so that these will not be described.

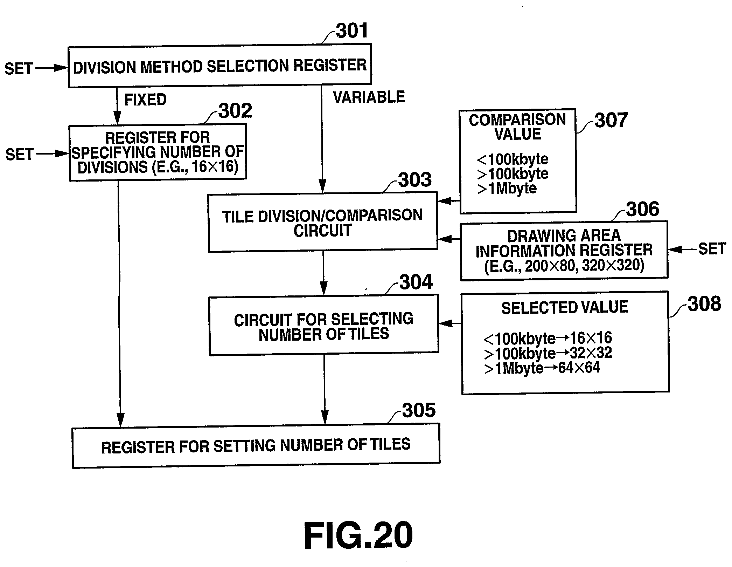

FIG. 20 is a block diagram showing the configuration of a tile division judging circuit 11d shown in FIG. 3. Whether to use a fixed or variable tile division method is set in a division method selection register 301 by the CPU 102. Moreover, the number of tile divisions indicating the size of one tile is set by the CPU 102 in a register 302 for specifying the number of divisions. When the division method is fixed, the number of divisions (e.g., 16 × 16) specified by the register 302 for specifying the number of divisions is set in a register 305 for setting the number of tiles.

On the other hand, when the tile division method is variable, a tile division/comparison circuit 303 reads a drawing area (H × W) from a drawing area information register 306 set by the CPU 102, and judges whether the data amount of the drawing area is larger or smaller than 100 kilobytes in comparison with a referential comparison value 307, or is 1 megabyte or more. A circuit 304 for selecting the number of tiles selects a proper number of tiles from a plurality of selection values 308 in accordance with the result of this judgment. For example, 16 × 16 is selected when the data amount is smaller than 100 kilobytes, or 32 × 32 is selected when the data amount is larger than 100 kilobytes, or 64 × 64 is selected when the data amount is 1 megabyte or more. Thus, the larger the data amount is, the larger the selected number of tiles is. The number of tiles selected here is set in the register 305 for setting the number of tiles.

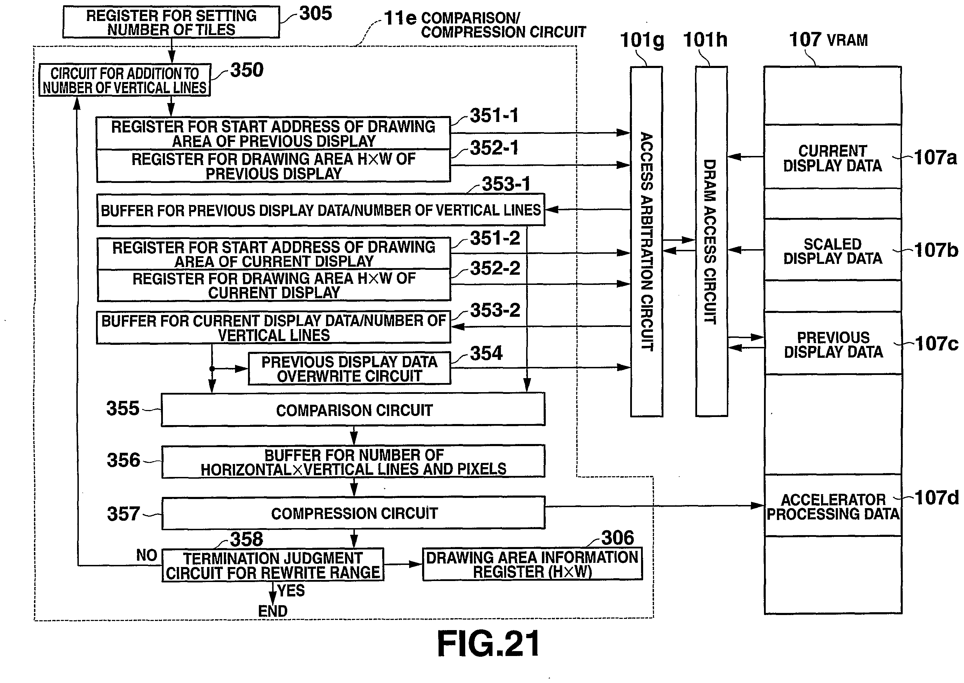

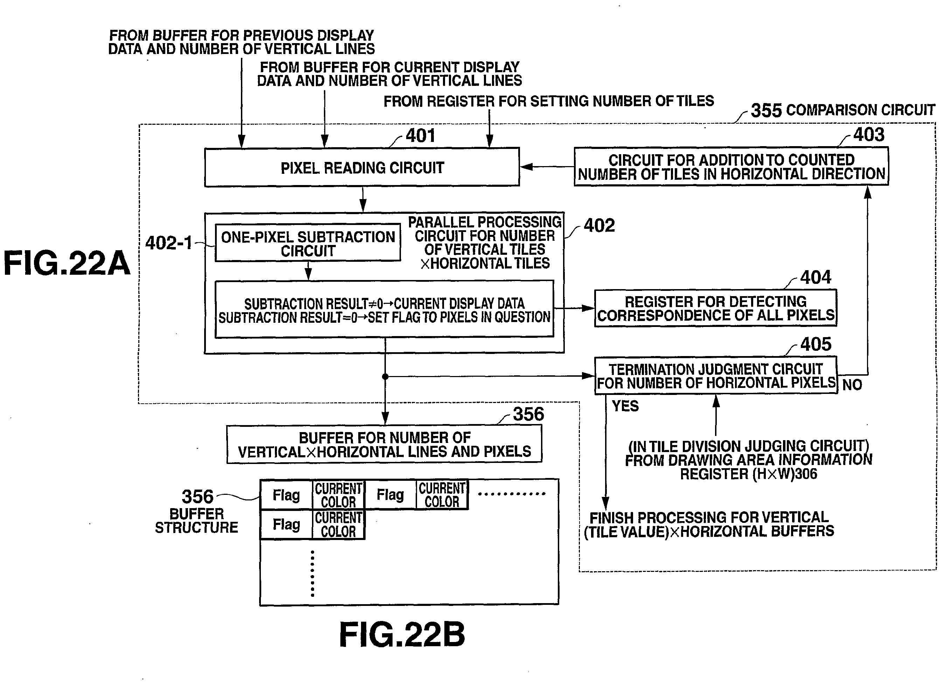

FIG. 21 is a block diagram showing the configuration of the comparison/compression circuit 11e shown in FIG. 3. FIGS. 22A and 22B are diagrams showing a detailed configuration of the comparison circuit 355 shown in FIG. 21. In FIG. 21, a start address of the drawing area of the previous display is stored in a register 351-1, and data on the size of the drawing area H × W of the previous display is stored in a register 352-1. Moreover, data on the number of vertical lines of the previous display data is stored in a buffer 353-1 for the previous display data/the number of vertical lines.

Furthermore, a start address of the drawing area of the current display is stored in a register 351-2, and data on the size of the drawing area H × W of the current display is stored in a register 352-2. Moreover, data on the number of vertical lines of the current display data is stored in a buffer 353-2 for the current display data/the number of vertical lines.

The comparison circuit 355 reads the previous display data from the memory area 107c on the basis of the start address of the drawing area of the previous display, the size of the drawing area (H × W) and the number of vertical line buffers, and also reads the current display data from the memory area 107a on the basis of the start address of the drawing area of the current display, the size of the drawing area (H × W) and the number of vertical line buffers, thereby performing comparison per data for one tile.

That is, in the comparison circuit 355 in FIG. 21, a pixel reading circuit 401 reads the previous display data for one tile (here, 16 × 16) from the memory area 107c, and also reads the current display data for one tile (here, 16 × 16 pixels) from the memory area 107a, on the basis of the number of vertical lines of the previous display data from the buffer 353-1 for the previous display data/the number of vertical lines, the number of vertical lines of the current display data from the buffer 353-2 for the current display data/the number of vertical lines, and the number of tiles from the register 305 for setting the number of tiles. A parallel processing circuit 402 for the number of vertical tiles × horizontal tiles uses a one pixel subtraction circuit 402-1 to simultaneously perform the subtractions of the pixel value of the previous display data and the pixel value of the current display data for 16 × 16 pixels constituting one tile. In FIG. 22A, the single one pixel subtraction circuit 402-1 is shown and other components are omitted in the parallel processing circuit 402 for the number of vertical tiles × horizontal tiles, but the number of one pixel subtraction circuits 402-1 provided is as many as the number of pixels to be subtracted. The pixels in question are the current display data if the result of the subtraction is not 0, while a flag is set to the pixels in question if the result of the subtraction is 0. The result of the comparison is stored in a buffer 356 for the number of vertical × horizontal lines and pixels. A flag is set in a register 404 for detecting correspondence of all pixels when all of the 16 × 16 pixels correspond.

When the comparison of the display data for one tile is finished, a termination judgment circuit 405 for the number of horizontal pixels judges whether the number of horizontal pixels (here, MAX 1280) finished with the processing has been reached on the basis of information from the drawing area (H × W) information register 306. If the judgment is NO, this is reported to the pixel reading circuit 401 after the number of pixels (here, 16) in the horizontal direction for one tile is added in a circuit 403 for addition to the counted the number of tiles in the horizontal direction. The pixel reading circuit 401 thus reads the previous display data for the next one tile from the memory area 107c, and also reads the current display data for the next one tile from the memory area 107a. The parallel processing circuit 402 for the number of vertical tiles × horizontal tiles performs the comparison processing as described above, and stores the result of the comparison in the buffer 356 for the number of vertical × horizontal lines and pixels. Data on the comparison result stored in the buffer 356 for the number of vertical × horizontal lines and pixels is compressed in a compression circuit 357. When the compression is finished, a termination judgment circuit 358 for rewrite range judges whether a rewrite range of the display data is finished on the basis of drawing area information in the drawing area information register 306. If 800 lines are not reached yet, the lines in the vertical direction are incremented in a circuit 350 for addition to the number of vertical lines so that the processing described above is performed until 800 lines are reached in the vertical direction, and the processing is finished when 800 lines are reached.

Then, when the termination judgment circuit 405 for the number of horizontal pixels judges that the number of horizontal pixels has reached MAX = 1280 pixels, the processing for the vertical (tile value) × horizontal buffers finishes.

FIG. 22B shows one example of the configuration of the buffer 356 for the number of vertical × horizontal lines and pixels. In the buffer 356 for the number of vertical × horizontal lines and pixels, a flag is stored in a pixel in which the previous display data and the current display data are the same as a result of the comparison by the comparison circuit 355, and the current display data is stored as "current color" in a pixel in which the current display data is different from the previous display data.

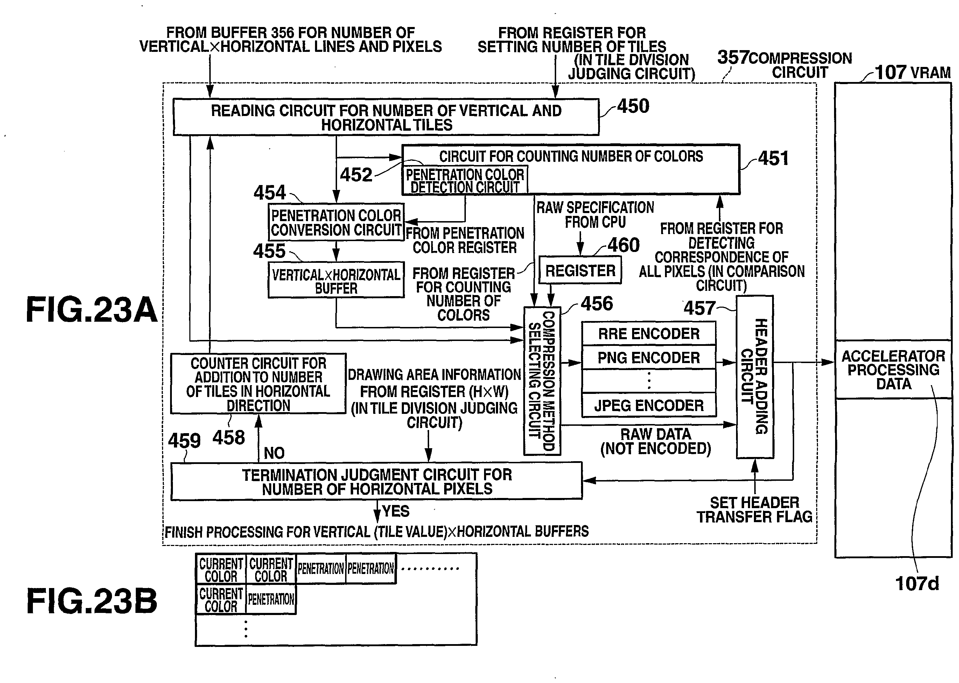

FIGS. 23A and 23B are block diagrams showing a detailed configuration of the compression circuit 357 shown in FIG. 21. In FIG. 23A, a reading circuit 450 for the number of vertical and horizontal tiles reads data for one tile (here, 16 × 16 pixels) from the comparison result data stored in the buffer 306 for the number of vertical × horizontal lines and pixels on the basis of the number of tiles set in the register 305 for setting the number of tiles.

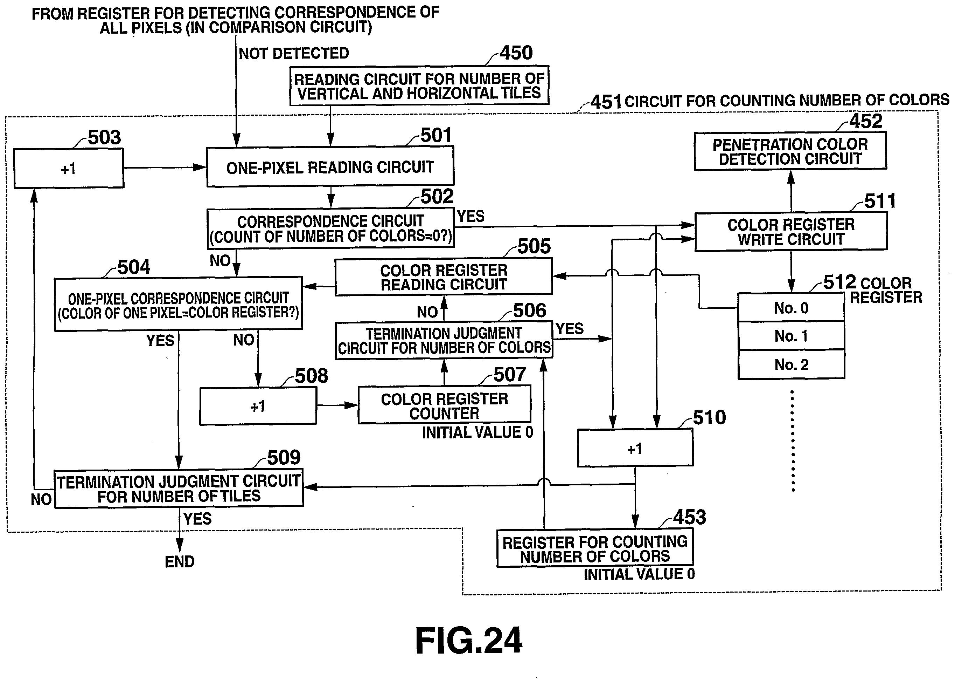

FIG. 24 is a block diagram showing a detailed configuration of a circuit 451 for counting the number of colors. In FIG. 24, when the contents in the register 404 for detecting correspondence of all pixels indicate that there is no correspondence, a one pixel reading circuit 501 reads data for the first one pixel from the read data for one tile. A correspondence circuit 502 judges whether the count of the number of colors equals to 0. In the initial setting, the judgment is YES because the count is set at 0, and a color register write circuit 511 writes the color of the read one pixel at a position of No. 0 in a color register 512. At the same time, the initial value 0 is incremented via a plus-one circuit 510, so that 1 is written into a register 453 for counting the number of colors.

At this point, a termination judgment circuit 509 for the number of tiles judges whether reading for one tile has been finished. The judgment is NO because the first one pixel is only read, and the value is incremented by one via a plus-one circuit 503. Thus, the one pixel reading circuit 501 reads the second one pixel data from the reading circuit 450 for the number of vertical and horizontal tiles. Since the count value of the register 453 for counting the number of colors is 1, the judgment of the correspondence circuit 502 is NO this time. In this case, a one pixel correspondence circuit 504 judges whether the color of the one pixel read this time corresponds to the color at the No. 0 position of the color register 512 read by a color register reading circuit 505. Here, if the judgment is NO, the initial value 0 of a color register counter 507 is incremented via a plus-one circuit 508, so that 1 is set. Next, a termination judgment circuit 506 for the number of colors judges whether the number of colors of the color register 512 is finished. Since the color at the No. 0 position of the color register 512 has already been read, the judgment here is YES. In this case, the color register write circuit 511 writes the color of the one pixel read this time into a position of No. 1 in the color register 512. At this point, the current count value 1 is incremented via the plus-one circuit 510, so that the count value of the register 453 for counting the number of colors is 2.

At this point, the termination judgment circuit 509 for the number of tiles judges whether reading for one tile has been finished. The judgment is NO because the second one pixel is only read, and the value is incremented via the plus-one circuit 503. Thus, the one pixel reading circuit 501 reads the third one pixel data from the reading circuit 450 for the number of vertical and horizontal tiles.

At this point, because the count of the number of colors = 2, the judgment of the correspondence circuit 502 is NO. In this case, the one pixel correspondence circuit 504 judges whether the color of the one pixel read this time corresponds to the color at the No. 0 position of the color register 512 read by the color register reading circuit 505. Here, if the judgment is NO, the count value of the color register counter 507 is incremented via the plus-one circuit 508, so that 2 is set. Next, the termination judgment circuit 506 for the number of colors judges whether the number of colors of the color register 512 is finished. Since the color is also stored at the No. 1 position of the color register 512, the judgment here is NO. In this case, the color register reading circuit 505 reads the color of the No. 1 position from the color register 512, and then inputs the color to the one pixel correspondence circuit 504.

The one pixel correspondence circuit 504 judges whether the color of the one pixel read third corresponds to the color at the No. 1 position of the color register 512 read by the color register reading circuit 505. Here, if the judgment is NO, the count value 2 of the color register counter 507 is incremented via the plus-one circuit 508, so that 3 is set. Next, the termination judgment circuit 506 for the number of colors judges whether the number of colors of the color register 512 is finished. Since all the colors stored at the No. 0 and No. 1 positions of the color register 512 have been read, the judgment here is YES. In this case, the color register write circuit 511 writes the color of the third one pixel into a position of No. 2 in the color register 512. At the same time, the current count value 2 is incremented via the plus-one circuit 510, so that the count value of the register 453 for counting the number of colors is 3.

At this point, the termination judgment circuit 509 for the number of tiles judges whether reading for one tile has been finished. The judgment is NO because the third one pixel is only read, and 1 is added via the plus-one circuit 503. Thus, the one pixel reading circuit 501 reads the fourth one pixel data from the reading circuit 450 for the number of vertical and horizontal tiles.

In the meantime, when the judgment in the one pixel correspondence circuit 504 becomes YES, the contents of the register 453 for counting the number of colors and the color register 512 are not changed, and the processing moves to the termination judgment circuit 509 for the number of tiles.

Thus, when the processing described above is finished after the sixteenth pixel is read by the one pixel reading circuit 501, the judgment in the termination judgment circuit 509 for the number of tiles becomes YES, so that the processing for the data for one tile finishes. At this point, different kinds of colors are stored in the color register 512. Moreover, since a final count value of the number of colors is stored in the register 453 for counting the number of colors, it is possible to know how many kinds of colors are present in one tile.

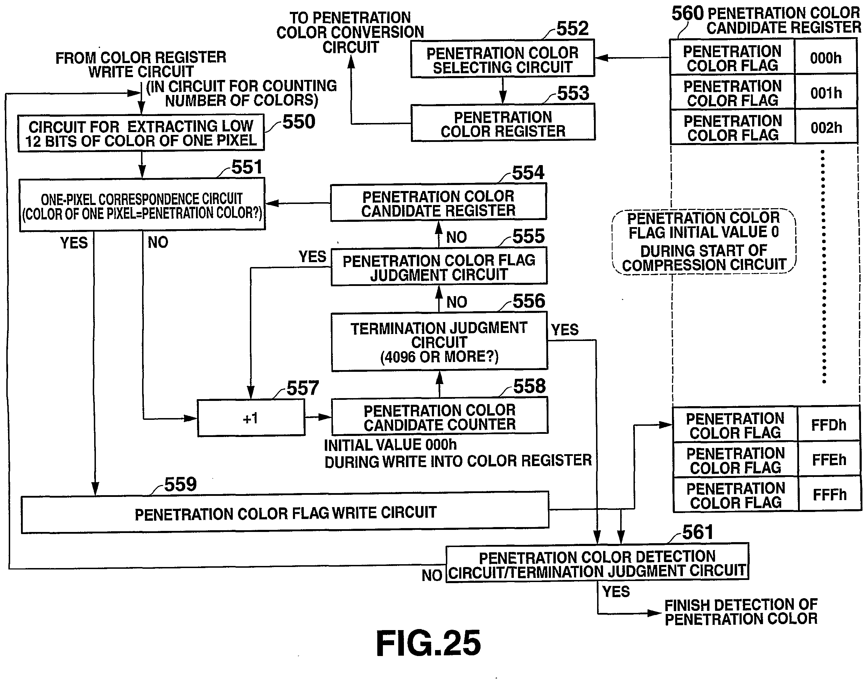

FIG. 25 is a block diagram showing a detailed configuration of a penetration color detection circuit 454 shown in FIG. 24. In FIG. 24, it has been explained that new colors are sequentially stored in the color register 512 by the color register write circuit 511. The color register write circuit 511 also inputs the color to be newly stored to the penetration color detection circuit 454 at the same time. A circuit 550 for extracting low 12 bits of the color of one pixel extracts low 12 bits of the color of the one pixel.

On the other hand, for example, 4096 colors as candidates of the penetration colors are sequentially stored in a penetration color candidate register 560, in which areas for setting penetration color flags are prepared in advance to correspond to the respective colors. The penetration color flags are not written at the start of the compression circuit 357 (initial value 0). The most significant (000h) colors are selected from the penetration color candidate register 560, and set in a penetration color candidate register 553.

A one pixel correspondence circuit 551 judges whether the color of the one pixel of the low 12 bits extracted by the circuit 550 for extracting low 12 bits of the color of one pixel corresponds to the color set in a penetration color candidate register 554. Here, if the judgment is NO, the count value (initial value 000h) of a penetration color candidate counter 558 is incremented via a plus-one circuit 557. Thus, the next penetration color (value 001h) is set in the penetration color candidate register 554.

Next, a termination judgment circuit 556 judges whether 4096 or more set in the penetration color candidate register 560 has been reached. Here, the judgment is NO because the color of the first 000h is only read, and a penetration color flag judgment circuit 555 then judges whether there is a penetration color to which a flag is set. Here, the judgment is NO because there is no such color yet. Next, the one pixel correspondence circuit 551 judges whether the color of the already extracted one pixel corresponds to the penetration color (001h) set in the penetration color candidate register 554. Here, if the judgment is NO, the penetration color candidate counter 558 is incremented by one, so that the next penetration color (002h) is set in the penetration color candidate register 554. Then, the pixel correspondence circuit 551 judges whether the color of the already extracted one pixel corresponds to the penetration color (002h) set in the penetration color candidate register 554. Here, if the judgment is YES, a penetration color flag write circuit 559 sets a penetration color flag to the current penetration color (002h). At the same time, a penetration color detection circuit/termination judgment circuit 561 judges whether the judgment of the penetration colors have been finished for all the pixels written by the color register write circuit 511. Here, the judgment is NO because the first pixel has only been judged, and low 12 bits of the next color written by the color register write circuit 511 are extracted.

On the other hand, the most significant color (000h) to which a flag has not been set yet is set in the penetration color candidate register 554. The one pixel correspondence circuit 551 judges whether the color of the next one pixel corresponds to the candidate color set in the penetration color candidate register 554. Subsequently, the processing is performed in the procedure described above, and there is already a penetration color (0002h) to which a flag is set at this point. This is detected by the penetration color flag judgment circuit 555. In this case, the count value of the penetration color candidate counter 558 is incremented via the plus-one circuit 557. Thus, the candidate color (0002h) to which the flag is set is skipped over to set a next candidate color in the penetration color candidate register 554, so that it is judged whether this candidate color corresponds to the color of the next one pixel.

Thus, the one pixel correspondence circuit 551 compares all the colors written by the color register write circuit 511 with the candidate colors in the penetration color candidate register 560 in descending order of ranks, and then judges whether they correspond to each other. Flags are set to the candidate colors that correspond.

A penetration color selecting circuit 552 selects the upper candidate color to which a flag is not set (which is not used), and sets this color in the penetration color register 553. At this point, the judgment in the penetration color detection circuit/termination judgment circuit 561 becomes YES, and the processing finishes.

Returning to FIG. 23, the contents of the penetration color candidate register 560 are input to the penetration color detection circuit 454. The penetration color detection circuit 454 refers to the contents of the penetration color candidate register 560 to perform conversion processing of replacing, with a penetration color, an unused color out of the color data for one tile read by the reading circuit 450 for the number of vertical and horizontal tiles. The result is stored in a vertical × horizontal buffer 455. FIG. 23B is a diagram showing one example of display data stored in the buffer 455. In the vertical × horizontal buffer 455, the penetration colors converted by the penetration color detection circuit 454 are stored as "transmitted", and other current display data are stored as "current color".

The display data in the vertical × horizontal buffer 455 is input to a compression method selecting circuit 456. Further, the compression method selecting circuit 456 receives the value of the number of colors of the register 453 for counting the number of colors. Moreover, when a RAW specification is set by the CPU 102 as described later, this is set in a register 460, so that data therein is also input to the compression method selecting circuit 456.

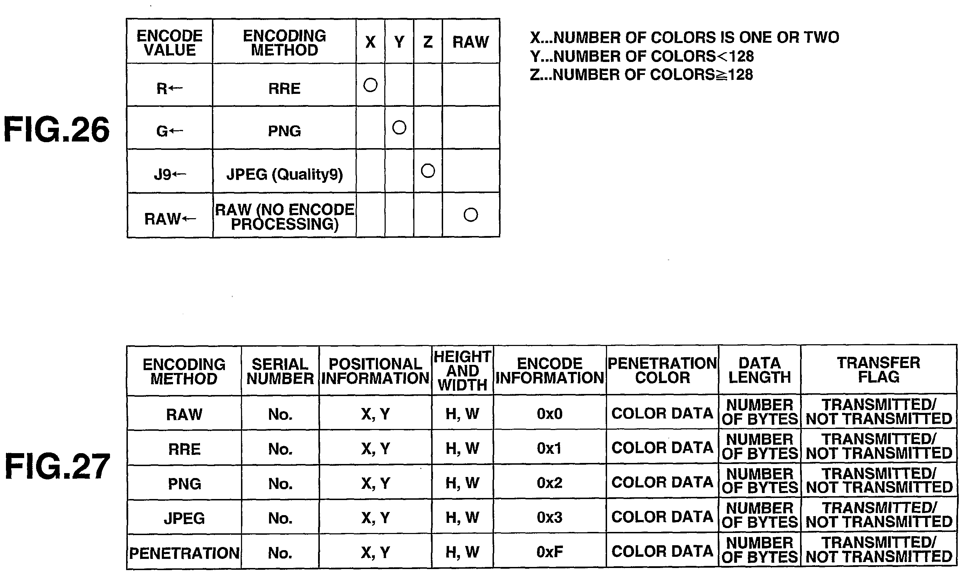

The compression method selecting circuit 456 has a table for deciding a compression method as shown in FIG. 26, and the selecting circuit 456 refers to such a table to select an encoding method corresponding to the value of the number of colors of the register 453 for counting the number of colors. For example, a rise and run length encoding (RRE) method is selected if the number of colors is one or two, or a PNG method is selected if the number of colors is three or more and less than 128, or a JPEG encoding method is selected if the number of colors is 128 or more. In addition, the encoding processing is not performed when the RAW specification is set, for example, when a decryption function is not provided on the side of the client apparatus 20.

Thus, the selection of the encoding method corresponding to the value of the number of colors makes it possible to increase the efficiency of compression. Here, 128 colors used as a judgment standard are not fixed, and can be changed in accordance with the size of one tile to reduce the amount of data. For example, 256 colors or more are used if the size of the tile is 32 × 32, or 512 colors or more are used if the size of the tile is 64 × 64.

In addition, since the joint photographic experts group (JPEG) encoder method is a nonreversible compression mode, the display data read by the reading circuit 450 for the number of vertical and horizontal tiles is input to an encoder, rather than the display data (FIG. 23B) obtained by the conversion processing in the penetration color detection circuit 454. Moreover, when a compression method is specified by the client apparatus 20, the specified compression method may be used.

Next, in accordance with the encoding method selected with reference to a table for result data and header formats as shown in FIG. 27, a header adding circuit 457 adds to the data a header including information such as a serial number, positional information, a height and width, encode information, the penetration colors, a data length, and a transfer flag (transfer or not). The header adding circuit 457 then stores the data as accelerator-processed data into the memory area 107d on the VRAM 107.

At this point, a termination judgment circuit 459 for the number of horizontal pixels judges whether the maximum number (here, 1280) of pixels in the horizontal direction has been reached. If the judgment is NO, an increment for one tile (16 pixels) is given in the horizontal direction via a counter circuit 458 for addition to the number of tiles in the horizontal direction. Thus, the reading circuit 450 for the number of vertical and horizontal tiles reads data for the next one tile. Subsequently, the processing is performed in the procedure described above. Then, when the termination judgment circuit 459 for the number of horizontal pixels judges that the maximum number (here, 1280) of pixels in the horizontal direction has been reached, the processing for the vertical (tile value) × horizontal buffers finishes.

After this processing, a return is made to FIG. 21, and, as described above, if the compression processing in the compression circuit 357 described above is finished, the termination judgment circuit 358 for rewrite range judges whether a rewrite range of the display data is finished on the basis of drawing area information in the drawing area information register 306. If 800 lines are not reached yet, the lines in the vertical direction are incremented in the circuit 350 for addition to the number of vertical lines so that the processing described above is performed until 800 lines are reached in the vertical direction, and the processing is finished when 800 lines are reached.

The operation of server processing executed by the CPU 102 of the server apparatus 10 using software is similar to that shown in FIG. 6, and will not be described.

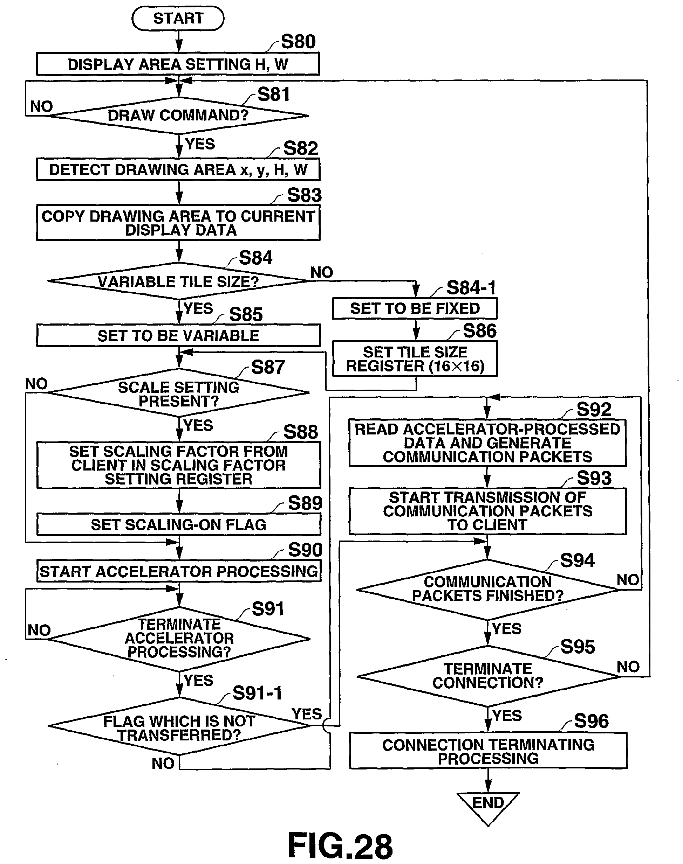

FIG. 28 is a flowchart showing details of transfer server processing SA in FIG. 6. This is substantially similar to the operation shown in FIG. 7 as the first embodiment, but in the second embodiment, the CPU 102 in the server apparatus 10 first secures, on the RAM 105, a display area (H × W) for writing data for one screen (step S80). Then, the CPU 102 judges whether data has been written into the display area in accordance with a draw command from the application program working on the server apparatus 10 (step S81). If the judgment is YES, the size (H × W) of the drawing area into which data has been written, and a coordinate position x, y are detected (step S82). Then, the display data written in the display area on the RAM 105 is copied into the memory area 107a on the VRAM 107. This serves as the current display data shown in FIG. 3.

Next, it is judged whether a variable tile size is set (step S84). If the judgment is YES, the division method selection register 301 (FIG. 20) in the tile division judging circuit 11d is set to be variable (step S85). If the judgment is NO, the division method selection register 301 (FIG. 20) is set to be fixed (step S84-1). Then, when the division method selection register 301 is set to be fixed, the register 302 for specifying the number of divisions is set to, for example, 16 × 16 (step S86). Then, it is judged whether there is a scale setting request from the client apparatus 20 (step S87). If the judgment is NO, the transition is made to step S90 described later. If the judgment is YES, the scaling factor from the client apparatus 20 is set in the scaling factor setting register C2 (FIG. 4) (step S88). Then, a scaling-on flag is set in the scaling on/off register C1 (FIG. 4) (step S89).

After the processing described above is finished, the processing in the accelerator circuit 101 is started (step S90). That is, a command to start the processing is sent to the scaling circuit 11c (FIG. 3) and the tile division judging circuit 11d (FIG. 3) from the CPU 102 (FIG. 2). Then, the CPU 102 waits until the processing in the accelerator circuit 101 is finished (step S91), and if the processing is finished, the CPU 102 judges whether the transfer flag is set to "not transferred" (step S91-1). If the judgment is YES, the transition is made to step S94. However, if the judgment is NO, the accelerator-processed data stored in the memory area 107d on the VRAM 107 is read to generate communication packets containing the drawing data displayed by the client apparatus 20 (step S92). When encryption processing is performed in the encryption circuit 11f, the encrypted data stored in the memory area 107e is read to generate communication packets.

Next, the transmission of the communication packets to the client apparatus 20 is started (step S93). Then, the transmission of all the communication packets is confirmed (step S94). When the transmission is confirmed, it is judged whether the client apparatus 20 has informed of the termination of the connection (step S95). When the judgment is NO, a return is made to step 81, and the subsequent processing is continued. When the judgment in step S95 is YES, connection terminating processing (step S96) is carried out to finish the communication with the client apparatus 20.

The circuit configuration of the client apparatus 20 in the second embodiment is similar to the configuration shown in FIG. 14, and will not be described.

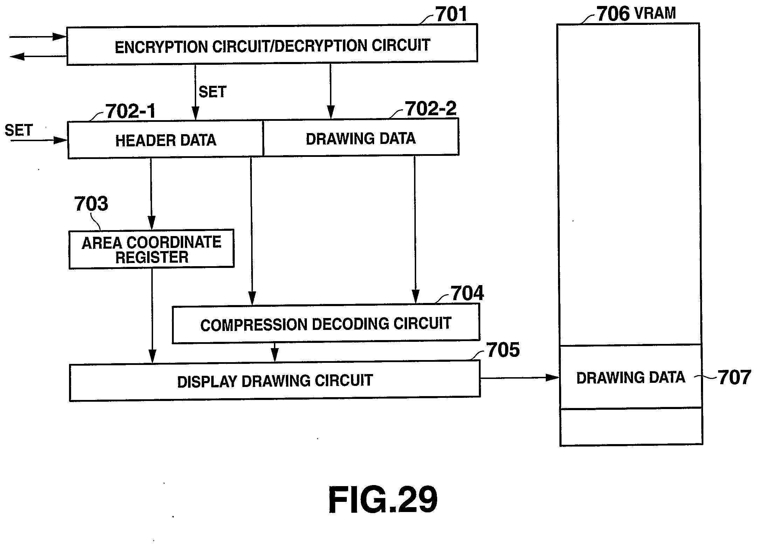

FIG. 29 is a diagram showing a detailed configuration of the accelerator circuit 21 in the client apparatus 20. A encryption/decryption circuit 701 decrypts a compressed/encrypted data file for one tile sent from the server apparatus 10. The decoded data file is set as header data 702-1 and drawing data 702-2. A compression decoding circuit 704 decodes the drawing data by an extension method corresponding to the compression mode written in the header data 702-1. The decoded drawing data is drawn in a memory area 707 on a VRAM 706 on the basis of the size H × W of the drawing data set in an area coordinate register 703 and on the basis of X, Y coordinates.

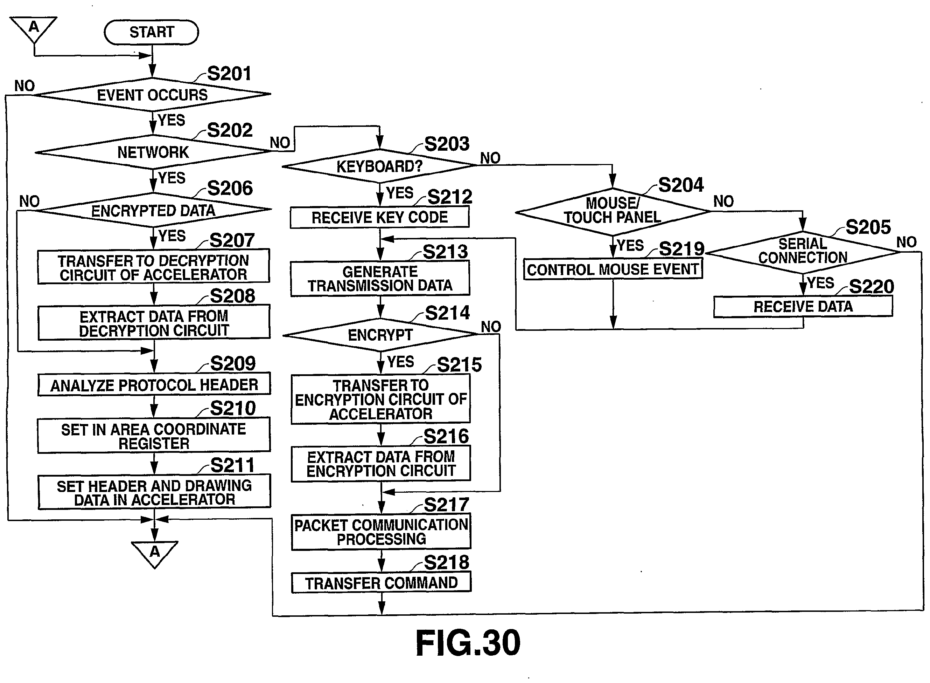

The processing and operation in the client apparatus 20 are similar to those in FIG. 15, and will not be described. FIG. 30 is a flowchart showing details of control of a communication with the server. This is substantially similar to the operation shown in FIG. 16 as the first embodiment, but in the second embodiment, the operation is put on standby until any event occurs by the operation of the keyboard or mouse (step S201). If an event occurs, it is judged whether this event is the reception of the data from the server apparatus 10 via the network (step S202). If the judgment is NO, it is judged whether this event is the operation of the keyboard (step S203). Here, if the judgment is NO, it is judged whether this event is the operation of the mouse or touch panel (step S204). If the judgment is NO, it is judged whether data has been input via a serial connection (step S205). If the judgment is NO, a return is made to step 201.

On the other hand, if YES in step S202, it is judged whether the data received from the server apparatus 10 is encrypted data (step S206). If the judgment is NO, the transition is immediately made to step S209. If the judgment is YES, the encrypted data is transferred to the inside encryption/decryption circuit 701 in order to decrypt the encrypted data (step S207). Then, the decrypted data is extracted from this encryption/decryption circuit 701 (step S208), and a protocol header thereof is analyzed (step S209). Then, the drawing area (H × W) and the coordinates x, y extracted from this header are set in the register (step S210). Then, the header and the drawing data are set in the accelerator circuit 21 (step S211). Thus, after predetermined processing is performed in the accelerator circuit 21, the data is displayed on the display device 27.

Furthermore, if the judgment in step S203 is YES, a key code corresponding to the operated keyboard is received (step S212). Then, transmission data is generated on the basis of this key code (step S213). Then, it is judged whether to encrypt this transmission data (step S214). If the judgment is NO, the transition is immediately made to step S217. If the judgment in step S214 is YES, the transmission data is transferred to and encrypted in the encryption/decryption circuit 701 in the accelerator circuit 21 (step S215). Then, the encrypted transmission data is extracted from the encryption/decryption circuit 701 (step S216), processed for a packet communication (step S217), and transmitted to the server apparatus 10 in accordance with a transfer command (step S218). Subsequently, a return is made to step 201.

Still further, if the judgment in step S204 is YES, control is performed to set data corresponding to the contents of the operation of the mouse or touch panel (step S219). Subsequently, the processing after step S213 is performed as in the case of the operation of the keyboard.

Further yet, if the judgment in step S205 is YES, input data is received (step S220). Subsequently, the processing after step S213 is performed as in the case of the operation of the keyboard.

According to the embodiment described above, the magnification changing circuit (scaling circuit 11c, the area dividing circuit (tile division judging circuit 11d and the comparison/compression circuit 11e are formed by hardware in generating the display data transmitted to the client apparatus 20, so that it is possible to generate the display data transmitted to the client apparatus 20 at high velocity while reducing the load on the CPU 102. Moreover, because the load on the CPU 102 is reduced, the number of client apparatuses 20 to be connected can be increased accordingly. The tasks of the hardware circuits and the task of the CPU 102 which controls the operations of the hardware circuits are allotted, and the processing requiring loads is performed by the hardware circuits, so that the load on the CPU 102 can be reduced.

According to this second embodiment, the magnification changing circuit, the area dividing circuit and the judging circuit are formed by hardware in generating the display data transmitted to the client apparatuses so that it is possible to generate the display data transmitted to the client apparatus at high velocity while reducing the load on control means. Moreover, because the load on the control means is reduced, the number of client apparatuses to be connected can be increased accordingly.

Furthermore, the display data is compressed by the compression circuit configured by the hardware, and it is thus possible to further reduce the load on the control means.

Still further, the tasks of the hardware circuits and the task of the control means which controls the operations of the hardware circuits are allotted, and the processing requiring loads is performed by the hardware circuits, so that the load on the control means can be reduced.

Additional advantages and modifications will readily occur to those skilled in the art. Therefore, the invention in its broader aspects is not limited to the specific details and representative embodiments shown and described herein. Accordingly, various modifications may be made without departing from the scope of the general inventive concept as defined by the appended claims and their equivalents.

## Claims

1. A server apparatus (10) of a computer system which transmits display data generated in the server apparatus (10) to a client apparatus (20) and which displays the display data on a display screen of the client apparatus (20), the server apparatus (10) comprising:
client information storing means (105) for storing display area information received from the client apparatus (20);
drawing area setting means (102) for setting, as a drawing area of the display data, an area of a size obtained by enlarging the display area of the client apparatus (20) with a predetermined magnification, on the basis of the display area information from the client apparatus (20) stored by the client information storing means;
real display control means (102) for extracting, out of the display data drawn in the drawing area set by the drawing area setting means, display data of an area corresponding to the display area of the client apparatus (20), and transferring the extracted display data to the client apparatus (20), when a display command received from the client apparatus (20) is a real display command; and
full display control means (102) for reducing the display data drawn in the drawing area set by the drawing area setting means in accordance with the display area of the client apparatus (20), and transferring the reduced display data to the client apparatus (20), when a display command received from the client apparatus (20) is a full display command.

2. The server apparatus (10) according to claim 1, wherein the display area information received from the client apparatus (20) comprises display screen size information indicating a screen size of the display screen of the client apparatus and magnification information indicating the predetermined magnification.

3. The server apparatus (10) according to claim 1 or 2, wherein the full display control means (102) further comprises:
reduction circuit means for reducing the display data drawn in the drawing area set by the drawing area setting means, the reduction ratio being an inverse of the magnification of the display area, on the basis of the information on the magnification of the display area which are stored by the client information storing means, when a display command received from the client apparatus (20) is the full display command, and the display data reduced in accordance with the display area of the client apparatus (20) by the reduction circuit means is transferred to the client apparatus (20).

4. The server apparatus (10) of the computer system according to any of claims 1 to 3, wherein the information on the magnification of the display area of the client apparatus (20) stored by the client information storing means includes information on an arbitrary magnification specified in accordance with operation of a user of the client apparatus (20).

5. The server apparatus (10) of the computer system according to any of claims 1 to 4, further comprising, as hardware circuits:
current display data storing means (107) for storing display data for a current screen which is transmitted to the client apparatus (20) and which corresponds to the area set by the display area setting means;
a magnification changing circuit (101) which changes the magnification of the display data for the current screen stored in the current display data storing means;
an area dividing circuit (101) which divides, into a plurality of display areas, the display data for the current screen whose magnification has been changed; and
a comparison circuit (101) which compares, for each of the display areas divided by the area dividing circuit (101), the display data for the current screen stored in the current display data storing means with display data for a previous screen transmitted to the client apparatus (20), in order to judge whether there is a difference between these display data, the display data for the display area judged to have a difference by the comparison circuit (101) being transmitted to the client apparatus (20).

6. The server apparatus (10) according to claim 5, further comprising a compression circuit (101) which compresses the display data judged to have a difference by the comparison circuit (101), the display data compressed by the compression circuit (101) being transmitted to the client apparatus (20).

7. The server apparatus (10) according to claim 5 or 6, further comprising control means (102) for setting initial values in the magnification changing circuit (101), the area dividing circuit (101) and the comparison circuit (101) to sequentially operate these circuits.

8. The server apparatus (10) according to claim 5 or 6, further comprising control means (102) for setting initial values in the magnification changing circuit (101), the area dividing circuit (101) and the comparison circuit (101) to sequentially operate these circuits, the control means (102) causing the current display data storing means to perform processing of storing the display data for the current screen, causing the magnification changing circuit (101) to perform processing of changing the magnification of the display data for the current screen, causing the area dividing circuit (101) to perform processing of dividing, into a plurality of display areas, the display data for the current screen whose magnification has been changed, and causing the comparison circuit (101) to perform processing of judging whether the display data for each of the display areas has a difference.

## Patentansprüche

1. Servervorrichtung (10) eines Computersystems, das in der Servervorrichtung (10) erzeugte Anzeigedaten zu einer Clientvorrichtung (20) sendet und die Anzeigedaten an einem Anzeigebildschirm der Clientvorrichtung (20) anzeigt, wobei die Servervorrichtung (10) umfasst:
eine Clientinformationen-Speichereinrichtung (105) zum Speichern von Anzeigebereichsinformationen, die von der Clientvorrichtung (20) empfangen werden,
eine Zeichnungsbereich-Setzeinrichtung (102) zum Setzen, als eines Zeichnungsbereichs der Anzeigedaten, eines Bereichs mit einer Größe, die durch das Vergrößern des Anzeigebereichs der Clientvorrichtung (20) mit einer vorbestimmten Vergrößerung erhalten wird, basierend auf den Anzeigebereichsinformationen von der Clientvorrichtung (20), die durch die Clientinformationen-Speichereinrichtung gespeichert werden,
eine Echtanzeige-Steuereinrichtung (102) zum Extrahieren, aus den in dem durch die Zeichnungsbereich-Setzeinrichtung gesetzten Zeichnungsbereich gezeichneten Anzeigedaten, von Anzeigedaten eines Bereichs in Entsprechung zu dem Anzeigebereich der Clientvorrichtung (20) und zum Übertragen der extrahierten Anzeigedaten zu der Clientvorrichtung (20), wenn ein von der Clientvorrichtung (20) empfangener Anzeigebefehl ein Echtanzeigebefehl ist, und
eine Vollanzeige-Steuereinrichtung (102) zum Reduzieren der in dem durch die Zeichnungsbereich-Setzeinrichtung gesetzten Zeichnungsbereich gezeichneten Anzeigedaten in Entsprechung zu dem Anzeigebereich der Clientvorrichtung (20) und zum Übertragen der reduzierten Anzeigedaten zu der Clientvorrichtung (20), wenn ein von der Clientvorrichtung (20) empfangener Anzeigebefehl ein Vollanzeigebefehl ist.

2. Servervorrichtung (10) nach Anspruch 1, wobei die von der Clientvorrichtung (20) empfangenen Anzeigebereichsinformationen Anzeigebildschirmgrößeninformationen, die eine Bildschirmgröße des Anzeigebildschirms der Clientvorrichtung angeben, und Vergrößerungsinformationen, die die vorbestimmte Vergrößerung angeben, umfassen.

3. Servervorrichtung (10) nach Anspruch 1 oder 2, wobei die Vollanzeige-Steuereinrichtung (102) weiterhin umfasst:
eine Reduktionsschaltungseinrichtung zum Reduzieren der in dem durch die Zeichnungsbereich-Setzeinrichtung gesetzten Zeichnungsbereich gezeichneten Anzeigedaten, wobei das Reduktionsverhältnis ein Kehrwert der Vergrößerung des Anzeigebereichs ist, basierend auf den Informationen zu der Vergrößerung des Anzeigebereichs, die durch die Clientinformationen-Speichereinrichtung gespeichert werden, wenn ein von der Clientvorrichtung (20) empfangener Anzeigebefehl der Vollanzeigebefehl ist, wobei die Entsprechung zu dem Anzeigebereich der Clientvorrichtung (20) reduzierten Anzeigedaten zu der Clientvorrichtung (20) übertragen werden.

4. Servervorrichtung (10) eines Computersystems nach einem der Ansprüche 1 bis 3, wobei die durch die Clientinformationen-Speichereinrichtung gespeicherten Informationen zu der Vergrößerung des Anzeigebereichs der Clientvorrichtung (20) Informationen zu einer beliebigen Vergrößerung, die in Entsprechung zu einer Betätigung eines Benutzers der Clientvorrichtung (20) spezifiziert wird, enthalten.

5. Servervorrichtung (10) eines Computersystems nach einem der Ansprüche 1 bis 4, die weiterhin als Hardwareschaltungen umfasst:
eine Aktuelle-Anzeigedaten-Speichereinrichtung (107) zum Speichern von Anzeigedaten für einen aktuellen Bildschirm, die zu der Clientvorrichtung (20) gesendet werden und dem durch die Anzeigebereich-Setzeinrichtung gesetzten Bereich entsprechen,
eine Vergrößerungsänderungsschaltung (101), die die Vergrößerung der in der Aktuelle-Anzeigedaten-Speichereinrichtung gespeicherten Anzeigedaten für den aktuellen Bildschirm ändert,
eine Bereichsteilungsschaltung (101), die die Anzeigedaten für den aktuellen Bildschirm, deren Vergrößerung geändert wurde, in eine Vielzahl von Anzeigebereichen teilt, und
eine Vergleichsschaltung (101), die für jeden der durch die Bereichsteilungsschaltung (101) geteilten Anzeigebereiche die in der Aktuelle-Anzeigedaten-Speichereinrichtung gespeicherten Anzeigedaten für den aktuellen Bildschirm mit zu der Clientvorrichtung (20) gesendeten Anzeigedaten für einen vorausgehenden Bildschirm vergleicht, um zu bestimmen, ob eine Differenz zwischen diesen Anzeigedaten vorhanden ist, wobei die Anzeigedaten für den Anzeigebereich, für die durch die Vergleichsschaltung (101) eine Differenz bestimmt wurde, zu der Clientvorrichtung (20) gesendet werden.

6. Servervorrichtung (10) nach Anspruch 5, die weiterhin eine Kompressionsschaltung (101) umfasst, die die Anzeigedaten, für die durch die Vergleichsschaltung (101) eine Differenz bestimmt wurde, komprimiert, wobei die durch die Kompressionsschaltung (101) komprimierten Anzeigedaten zu der Clientvorrichtung (20) gesendet werden.

7. Servervorrichtung (10) nach Anspruch 5 oder 6, die weiterhin eine Steuereinrichtung (102) zum Setzen von Anfangswerten in der Vergrößerungsänderungsschaltung (101), in der Bereichsteilungsschaltung (101) und in der Vergleichsschaltung (101) für ein sequentielles Betreiben dieser Schaltungen umfasst.

8. Servervorrichtung (10) nach Anspruch 5 oder 6, die weiterhin eine Steuereinrichtung (102) zum Setzen von Anfangswerten in der Vergrößerungsänderungsschaltung (101), in der Bereichsteilungsschaltung (101) und in der Vergleichsschaltung (101) für ein sequentielles Betreiben dieser Schaltungen umfasst, wobei die Steuereinrichtung (102) die Aktuelle-Anzeigedaten-Speichereinrichtung veranlasst zum Durchführen einer Verarbeitung zum Speichern der Anzeigedaten für den aktuellen Bildschirm, die Vergrößerungsänderungsschaltung (101) veranlasst zum Durchführen einer Verarbeitung zum Ändern der Vergrößerung der Anzeigedaten für den aktuellen Bildschirm, die Bereichsteilungsschaltung (101) veranlasst zum Durchführen einer Verarbeitung zum Teilen, in eine Vielzahl von Anzeigebereichen, der Anzeigedaten für den aktuellen Bildschirm, deren Vergrößerung geändert wurde, und die Vergleichsschaltung (101) veranlasst zum Durchführen einer Verarbeitung zum Bestimmen, ob die Anzeigedaten für jeden der Anzeigebereiche eine Differenz aufweisen.

## Revendications

1. Appareil serveur (10) d'un système informatique qui transmet des données d'affichage, générées dans l'appareil serveur (10), à un appareil client (20), et qui affiche les données d'affichage sur un écran d'affichage de l'appareil client (20), l'appareil serveur (10) comprenant :
un moyen de stockage d'informations client (105) pour stocker des informations de zone d'affichage reçues en provenance de l'appareil client (20) ;
un moyen de définition de zone de dessin (102) pour définir, en tant qu'une zone de dessin des données d'affichage, une zone d'une taille obtenue en agrandissant la zone d'affichage de l'appareil client (20) avec un agrandissement prédéterminé, sur la base des informations de zone d'affichage en provenance de l'appareil client (20) stockées par le moyen de stockage d'informations client ;
un moyen de commande d'affichage réel (102) pour extraire, à partir des données d'affichage dessinées dans la zone de dessin définie par le moyen de définition de zone de dessin, des données d'affichage d'une zone correspondant à la zone d'affichage de l'appareil client (20), et transférer les données d'affichage extraites vers l'appareil client (20), lorsqu'une instruction d'affichage reçue en provenance de l'appareil client (20) correspond à une instruction d'affichage réel ; et
un moyen de commande d'affichage complet (102) pour réduire les données d'affichage dessinées dans la zone de dessin définie par le moyen de définition de zone de dessin conformément à la zone d'affichage de l'appareil client (20), et transférer les données d'affichage réduites à l'appareil client (20), lorsqu'une instruction d'affichage reçue en provenance de l'appareil client (20) correspond à une instruction d'affichage complet.

2. Appareil serveur (10) selon la revendication 1, dans lequel les informations de zone d'affichage reçues en provenance de l'appareil client (20) comprennent des informations de taille d'écran d'affichage indiquant une taille d'écran de l'écran d'affichage de l'appareil client et des informations d'agrandissement indiquant l'agrandissement prédéterminé.

3. Appareil serveur (10) selon la revendication 1 ou 2, dans lequel le moyen de commande d'affichage complet (102) comprend en outre :
un moyen de circuit de réduction pour réduire les données d'affichage dessinées dans la zone de dessin définie par le moyen de définition de zone de dessin, le rapport de réduction étant l'inverse de l'agrandissement de la zone d'affichage, sur la base des informations sur l'agrandissement de la zone d'affichage qui sont stockées par le moyen de stockage d'informations client, lorsqu'une instruction d'affichage reçue en provenance de l'appareil client (20) correspond à l'instruction d'affichage complet, et dans lequel les données d'affichage réduites selon la zone d'affichage de l'appareil client (20) par le moyen de circuit de réduction sont transférées à l'appareil client (20).

4. Appareil serveur (10) du système informatique selon l'une quelconque des revendications 1 à 3, dans lequel les informations sur l'agrandissement de la zone d'affichage de l'appareil client (20), stockées par le moyen de stockage d'informations client, incluent des informations sur un agrandissement arbitraire spécifié conformément à l'opération d'un utilisateur de l'appareil client (20).

5. Appareil serveur (10) du système informatique selon l'une quelconque des revendications 1 à 4, comprenant en outre, en tant que des circuits matériels :
un moyen de stockage de données d'affichage en cours (107) pour stocker des données d'affichage pour un écran en cours qui sont transmises à l'appareil client (20) et qui correspondent à la zone définie par le moyen de définition de zone d'affichage ;
un circuit de modification d'agrandissement (101) qui modifie l'agrandissement des données d'affichage pour l'écran en cours, stockées dans le moyen de stockage de données d'affichage en cours ;
un circuit de division en zones (101) qui divise, en une pluralité de zones d'affichage, les données d'affichage pour l'écran en cours dont l'agrandissement a été modifié ; et
un circuit de comparaison (101) qui compare, pour chacune des zones d'affichage divisées par le circuit de division en zones (101), les données d'affichage pour l'écran en cours stockées dans le moyen de stockage de données d'affichage en cours, à des données d'affichage pour un écran précédent transmises à l'appareil client (20), afin de déterminer s'il existe une différence entre ces données d'affichage, les données d'affichage pour la zone d'affichage déterminées comme présentant une différence par le circuit de comparaison (101) étant transmises à l'appareil client (20).

6. Appareil serveur (10) selon la revendication 5, comprenant en outre un circuit de compression (101) qui compresse les données d'affichage déterminées comme présentant une différence par le circuit de comparaison (101), les données d'affichage compressées par le circuit de compression (101) étant transmises à l'appareil client (20).

7. Appareil serveur (10) selon la revendication 5 ou 6, comprenant en outre un moyen de commande (102) pour définir des valeurs initiales dans le circuit de modification d'agrandissement (101), le circuit de division en zones (101) et le circuit de comparaison (101) en vue d'exploiter séquentiellement ces circuits.

8. Appareil serveur (10) selon la revendication 5 ou 6, comprenant en outre un moyen de commande (102) pour définir des valeurs initiales dans le circuit de modification d'agrandissement (101), le circuit de division en zones (101) et le circuit de comparaison (101) en vue d'exploiter séquentiellement ces circuits, le moyen de commande (102) amenant le moyen de stockage de données d'affichage en cours à mettre en oeuvre un traitement de stockage des données d'affichage pour l'écran en cours, amenant le circuit de modification d'agrandissement (101) à mettre en oeuvre un traitement de modification de l'agrandissement des données d'affichage pour l'écran en cours, amenant le circuit de division en zones (101) à mettre en oeuvre un traitement de division, en une pluralité de zones d'affichage, des données d'affichage pour l'écran en cours dont l'agrandissement a été modifié, et amenant le circuit de comparaison (101) à mettre en oeuvre un traitement pour déterminer si les données d'affichage pour chacune des zones d'affichage présentent une différence.
